# EUROPEAN PATENT APPLICATION

(11) **EP 4 836 385 A1**
(43) Date of publication of application: **04.11.2026**
(21) Application number: 23962879.5
(22) Date of filing: 29.12.2023
(51) Int. Cl.: H04L 67/14, H04W 76/10

(54) **USER PLANE POSITIONING CONNECTION PROCESSING METHOD, FIRST NETWORK ELEMENT, SECOND NETWORK ELEMENT, AND TERMINAL**

(71) Applicant: Beijing Xiaomi Mobile Software Co., Ltd., Beijing 100085 (CN)
(72) Inventor: GONG, Yubing, Beijing 100085 (CN); MAO, Yuxin, Beijing 100085 (CN)
(74) Representative: Dehns Germany Partnerschaft mbB
(86) International application number: PCT/CN2023/143536
(87) International publication number: WO 2025/138205

(57) **Abstract**

The present disclosure relates to a user plane positioning connection processing method, a first network element, a second network element, and a terminal. The method comprises: sending a first identifier and a first message to a second network element, the first message being a message related to establishing a user plane connection or a message related to releasing a user plane connection, the first identifier being used to identify first information, and the first information being at least one of the following: the first network element, the user plane connection, and/or a location service session of the first network element with a terminal. In embodiments of the present disclosure, by means of sending a first identifier and a first message to a second network element, the second network element can, on the basis of the first identifier, accurately send a message to a first network element related to the terminal in the process of processing a user plane positioning connection, and may also lay a foundation for identifying, for the first network element and the terminal, an LCS session between the first network element and the terminal.

## Description

### TECHNICAL FIELD

The present disclosure relates to the field of communication technology, and in particular to a method for processing a user plane positioning connection, a first network function, a second network function, and a terminal.

### BACKGROUND

In the current User Plane Positioning Connection Management (UPP-CM) method, when the Location Management Function network function (LMF) interacts with the terminal through the Access and Mobility Management Function (AMF), the AMF cannot accurately forward messages to the relevant LMF of the terminal, and the LMF and UE cannot accurately identify the Location Service Session (LCS Session) between the LMF and the UE.

### SUMMARY

The embodiments of the present disclosure provide a method for processing a user plane positioning connection, a first network function, a second network function, and a terminal.

According to a first aspect of the embodiments of the present disclosure, there is provided a method for processing a user plane positioning connection, performed by a first network function, including:
sending a first identifier and a first message to a second network function;
where the first message is a message related to establishing a user plane connection or a message related to releasing a user plane connection;
the first identifier is configured to identify first information, and the first information is at least one of the first network function, the user plane connection, or a location service session between the first network function and a terminal.

By sending the first identifier and the first message to the second network function, the embodiments of the present disclosure enables the second network function to accurately send messages to the first network function related to the terminal based on the first identifier during the user plane positioning connection processing, and also lays the foundation for the first network function and the terminal to identify the LCS session between the first network function and the terminal.

According to a second aspect of the embodiments of the present disclosure, there is provided a method for processing a user plane positioning connection, performed by a second network function, including:
receiving a first identifier and a first message sent by a first network function;
where the first message is a message related to establishing a user plane connection or a message related to releasing a user plane connection;
the first identifier is configured to identify first information, and the first information is at least one of the first network function, the user plane connection, or a location service session between the first network function and a terminal.

According to a third aspect of the embodiments of the present disclosure, there is provided a method for processing a user plane positioning connection, performed by a terminal, including:
receiving a second identifier and a first message sent by a second network function;
where the first message is a message related to establishing a user plane connection or a message related to releasing a user plane connection;
the second identifier is determined based on a first identifier sent by a first network function, the first identifier is configured to identify first information, and the second identifier is configured to identify the first information in the terminal;
the first information is at least one of the first network function, the user plane connection, and a location service session between the first network function and the terminal.

According to a fourth aspect of the embodiments of the present disclosure, there is provided a first network function, including:
a transceiver module, configured to send a first identifier and a first message to a second network function;
where the first message is a message related to establishing a user plane connection or a message related to releasing a user plane connection;
the first identifier is configured to identify first information, and the first information is at least one of the first network function, the user plane connection, and a location service session between the first network function and a terminal.

According to a fifth aspect of the embodiments of the present disclosure, there is provided a second network function, including:
a transceiver module, configured to receive a first identifier and a first message sent by a first network function;
where the first message is a message related to establishing a user plane connection or a message related to releasing a user plane connection;
the first identifier is configured to identify first information, and the first information is at least one of the first network function, the user plane connection, and a location service session between the first network function and a terminal.

According to a sixth aspect of the embodiments of the present disclosure, there is provided a terminal, including:
a transceiver module, configured to receive a second identifier and a first message sent by a second network function;
where the first message is a message related to establishing a user plane connection or a message related to releasing a user plane connection;
the second identifier is determined based on a first identifier sent by a first network function, the first identifier is configured to identify first information, and the second identifier is configured to identify the first information in the terminal;
the first information is at least one of the first network function, the user plane connection, and a location service session between the first network function and the terminal.

According to a seventh aspect of the embodiments of the present disclosure, there is provided a communication system, including a first network function, a second network function, and a terminal, where the first network function is configured to implement the method for processing the user plane positioning connection according to the first aspect, the second network function is configured to implement the method for processing the user plane positioning connection according to the second aspect, and the terminal is configured to implement the method for processing the user plane positioning connection according to the third aspect.

According to an eighth aspect of the embodiments of the present disclosure, there is provided a storage medium storing instructions, where when the instructions are executed on a communication device, the communication device is caused to perform the method for processing the user plane positioning connection according to the first, second, or third aspect.

### BRIEF DESCRIPTION OF THE DRAWINGS

To more clearly illustrate the technical solutions in the embodiments of the present disclosure, the accompanying drawings required for describing the embodiments are introduced below. These drawings are merely some embodiments of the present disclosure and do not impose specific limitations on the scope of protection of the present disclosure.
FIG. 1 is an example schematic diagram of an architecture of a communication system provided according to an embodiment of the present disclosure;
FIG. 2 is an interactive schematic diagram of a method for processing a user plane positioning connection according to an embodiment of the present disclosure;
FIG. 3A is a flowchart of a method for processing a user plane positioning connection according to an embodiment of the present disclosure;
FIG. 3B is a flowchart of a method for processing a user plane positioning connection according to an embodiment of the present disclosure;
FIG. 3C is a flowchart of a method for processing a user plane positioning connection according to an embodiment of the present disclosure;
FIG. 3D is a flowchart of a method for processing a user plane positioning connection according to an embodiment of the present disclosure;
FIG. 3E is a flowchart of a method for processing a user plane positioning connection according to an embodiment of the present disclosure;
FIG. 4A is a flowchart of a method for processing a user plane positioning connection according to an embodiment of the present disclosure;
FIG. 4B is a flowchart of a method for processing a user plane positioning connection according to an embodiment of the present disclosure;
FIG. 4C is a flowchart of a method for processing a user plane positioning connection according to an embodiment of the present disclosure;
FIG. 4D is a flowchart of a method for processing a user plane positioning connection according to an embodiment of the present disclosure;
FIG. 4E is a flowchart of a method for processing a user plane positioning connection according to an embodiment of the present disclosure;
FIG. 5A is a flowchart of a method for processing a user plane positioning connection according to an embodiment of the present disclosure;
FIG. 5B is a flowchart of a method for processing a user plane positioning connection according to an embodiment of the present disclosure;
FIG. 5C is a flowchart of a method for processing a user plane positioning connection according to an embodiment of the present disclosure;
FIG. 5D is a flowchart of a method for processing a user plane positioning connection according to an embodiment of the present disclosure;
FIG. 6A is an interactive schematic diagram illustrating a method for processing a user plane positioning connection according to an embodiment of the present disclosure;
FIG. 6B is an interactive schematic diagram illustrating a method for processing a user plane positioning connection according to an embodiment of the present disclosure;
FIG. 6C is an interactive schematic diagram illustrating a method for processing a user plane positioning connection according to an embodiment of the present disclosure;
FIG. 6D is an interactive schematic diagram illustrating a method for processing a user plane positioning connection according to an embodiment of the present disclosure;
FIG. 7A is a structural schematic diagram of a first network function proposed in an embodiment of the present disclosure;
FIG. 7B is a structural schematic diagram of a second network function proposed in an embodiment of the present disclosure;
FIG. 7C is a structural schematic diagram of a terminal proposed in an embodiment of the present disclosure;
FIG. 8A is a structural schematic diagram of a communication device proposed in an embodiment of the present disclosure;
FIG. 8B is a structural schematic diagram of a chip proposed in an embodiment of the present disclosure.

### DETAILED DESCRIPTION

The embodiments of the present disclosure provide a method for processing a user plane positioning connection, a first network function, a second network function, and a terminal.

In a first aspect, the embodiments of the present disclosure provide a method for processing a user plane positioning connection, performed by a first network function. The method includes:
sending a first identifier and a first message to a second network function;
where the first message is a message related to establishing a user plane connection or a message related to releasing a user plane connection;
the first identifier is configured to identify first information, and the first information is at least one of the first network function, the user plane connection, or a location service session between the first network function and a terminal.

By sending the first identifier and the first message to the second network function, the embodiments of the present disclosure enables the second network function to accurately send messages to the first network function related to the terminal based on the first identifier during the user plane positioning connection processing, and also lays the foundation for the first network function and the terminal to identify the LCS session between the first network function and the terminal.

In some embodiments of the first aspect, the first identifier is allocated by the first network function after it determines to establish a user plane connection for user plane positioning, or,
the first identifier is allocated by the second network function upon receipt of a user plane connection establishment request sent by the terminal.

The first identifier in the embodiment of the present disclosure can be allocated by the first network function or configured by the second network function, improving the flexibility of allocating the first identifier.

In some embodiments, the first message related to establishing a user plane connection is at least one of the following:
a user plane connection establishment command message; or
a user plane connection establishment response message.

In the embodiment of the present disclosure, the first message related to establishing a user plane connection is at least one of a user plane connection establishment command message and a user plane connection establishment response message. This allows the second network function to accurately return the message returned by the terminal to the first network function indicated by the first identifier during the user plane connection establishment process, and also lays the foundation for the first network function and the terminal to identify the LCS session between the first network function and the terminal.

In some embodiments, sending the first identifier and the first message to the second network function includes:
determining to establish a user plane connection for user plane positioning and allocating the first identifier;
sending the first identifier and the first message to the second network function, where the first message is a user plane connection establishment command message.

The embodiment of the present disclosure provides a feasible solution for allocating the first identifier in a scenario where the network initiates a user plane connection, with the first network function determining to establish a user plane connection for user plane positioning and allocating the first identifier.

In some embodiments, sending the first identifier and the first message to the second network function includes:
receiving a user plane connection establishment request and the first identifier sent by the second network function, where the first identifier is allocated by the second network function upon receipt of the user plane connection establishment request sent by the terminal;
accepting the user plane connection establishment request, determining to establish a user plane connection for user plane positioning, and sending the first identifier and the first message to the second network function, where the first message is a user plane connection establishment response message or a user plane connection establishment command message.

The embodiment of the present disclosure provides a feasible solution for allocating the first identifier in a scenario where the terminal initiates a user plane connection, with the second network function determining to establish a user plane connection for user plane positioning and allocating the first identifier.

In some embodiments, sending the first identifier and the first message to the second network function includes:
receiving a user plane connection establishment request sent by the second network function, where the user plane connection establishment request is sent by the terminal to the second network function;
accepting the user plane connection establishment request, determining to establish a user plane connection for user plane positioning, and allocating the first identifier; and
sending the first identifier and the first message to the second network function, where the first message is a user plane connection establishment response message or a user plane connection establishment command message.

The embodiment of the present disclosure provides a feasible solution for allocating the first identifier in a scenario where the terminal initiates a user plane connection, with the first network function determining to establish a user plane connection for user plane positioning and allocating the first identifier.

In some embodiments, after sending the first identifier and the first message to the second network function, the method further includes:
receiving the first identifier and a user plane connection establishment complete message sent by the second network function.

In the embodiment of the present disclosure, the first network function receiving the first identifier and the user plane connection establishment complete message from the second network function enables the first network function to accurately identify the LCS session between the first network function and the terminal.

In some embodiments, the first message related to releasing the user plane connection is at least one of the following:
a user plane connection release command message; or
a user plane connection release response message.

In the embodiment of the present disclosure, the first message related to releasing the user plane connection is at least one of a user plane connection release command message and a user plane connection release response message, enabling the second network function to send the first message to the correct terminal based on the first identifier during the user plane connection release process.

In some embodiments, sending the first identifier and the first message to the second network function includes:
determining to release a user plane connection, and sending the first identifier and a first message to the second network function, where the first message is a user plane connection release command message.

The embodiment of the present disclosure describes a scenario where the network initiates the release of a user plane connection. By sending the first identifier and the first message to the second network function, where the first message is a user plane connection release command message, the first network function enables the second network function to send the first message to the correct terminal based on the first identifier during the release of the user plane connection.

In some embodiments, sending the first identifier and the first message to the second network function includes:
receiving a user plane connection release request and a first identifier sent by the second network function;
accepting the user plane connection release request, determining to release the user plane connection, and sending the first identifier and the first message to the second network function, where the first message is a user plane connection release response message or a user plane connection release command message.

The embodiment of the present disclosure describes a scenario where the terminal initiates the release of a user plane connection. The first network function receives a user plane connection release request and a first identifier sent by the second network function. The first network function can identify the LCS session between the first network function and the terminal based on the first identifier.

In some embodiments, after sending the first identifier and the first message to the second network function, the method further includes:
receiving the first identifier and a user plane connection release complete message sent by the second network function.

In the embodiment of the present disclosure, receiving the first identifier and the user plane connection release complete message sent by the second network function allows the first network function to identify the LCS session between the first network function and the terminal.

In a second aspect, the embodiment of the present disclosure provides a method for processing a user plane positioning connection, performed by a second network function, the method including:
receiving a first identifier and a first message sent by a first network function;
where the first message is a message related to establishing a user plane connection or a message related to releasing a user plane connection;
the first identifier is configured to identify first information, and the first information is at least one of the first network function, the user plane connection, or a location service session between the first network function and a terminal.

In some embodiments of the second aspect, the first identifier is allocated by the first network function after it determines to establish a user plane connection for user plane positioning, or,
the first identifier is allocated by the second network function upon receipt of a user plane connection establishment request sent by the terminal.

In some embodiments, the first message related to establishing a user plane connection is at least one of the following:
a user plane connection establishment command message; or
a user plane connection establishment response message.

In some embodiments, the first message is a user plane connection establishment command message;
the first identifier and the first message are sent by the first network function when it determines to establish a user plane connection for user plane positioning.

In some embodiments, the first identifier is configured to identify first information in the core network.

After receiving the first identifier and the first message sent by the first network function, the method further includes:
mapping the first identifier to a second identifier, and sending the second identifier and the first message to the terminal, where the second identifier is configured to identify the first information in the terminal;
receiving the second identifier and a user plane connection establishment complete message sent by the terminal;
mapping the second identifier to the first identifier, and sending the first identifier and the user plane connection establishment complete message to the first network function indicated by the first identifier.

In some embodiments, a first identifier is configured to identify first information in the core network and terminal.

After receiving the first identifier and a first message from the first network function, the method further includes:
using the first identifier as a second identifier, and sending the second identifier and the first message to the terminal;
receiving the second identifier and a user plane connection establishment complete message from the terminal; and
using the second identifier as the first identifier, and sending the first identifier and the user plane connection establishment complete message to the first network function indicated by the first identifier.

In some embodiments, receiving the first identifier and the first message sent by the first network function includes:
receiving a user plane connection establishment request from the terminal;
sending a user plane connection establishment request to the first network function; and
receiving the first identifier and the first message from the first network function, where the first message is a user plane connection establishment response or a user plane connection establishment command, and the first identifier is allocated by the first network function when it determines to establish a user plane connection for user plane positioning.

In some embodiments, receiving the first identifier and the first message sent by the first network function includes:
receiving a user plane connection establishment request sent by the terminal;
allocating the first identifier;
sending the user plane connection establishment request and the first identifier to the first network function;
receiving the first identifier and the first message sent by the first network function, where the first message is a user plane connection establishment response or a user plane connection establishment command.

In some embodiments, the first identifier is configured to identify first information in the core network.

After receiving the first identifier and the first message sent by the first network function, the method further includes:
mapping the first identifier to a second identifier, and sending the second identifier and the first message to the terminal, where the second identifier is configured to identify the first information in the terminal.

In some embodiments, the first identifier is configured to identify the first information in the core network and the terminal.

After receiving the first identifier and the first message sent by the first network function, the method further includes:
using the first identifier as a second identifier, sending the second identifier and the first message to the terminal.

In some embodiments, the message related to releasing the user plane connection includes at least one of the following:
a user plane connection release command message; or
a user plane connection release response message.

In some embodiments, the first message is a user plane connection release command message;
the first identifier and the first message are sent by the first network function after the first network function determines to release the user plane connection.

In some embodiments, the first identifier is configured to identify first information in the core network.

After receiving the first identifier and the first message sent by the first network function, the method further includes:
mapping the first identifier to a second identifier, and sending the second identifier and the first message to the terminal, where the second identifier is configured to identify the first information in the terminal;
receiving the second identifier and a user plane connection release complete message sent by the terminal;
mapping the second identifier to the first identifier, and sending the first identifier and the user plane connection release complete message to the first network function indicated by the first identifier.

In some embodiments, a first identifier is configured to identify first information in the core network and the terminal.

After receiving the first identifier and the first message sent by the first network function, the method further includes:
using the first identifier as a second identifier, and sending the second identifier and the first message to the terminal;
receiving the second identifier and a user plane connection release complete message sent by the terminal;
using the second identifier as the first identifier, and sending the first identifier and the user plane connection release complete message to the first network function indicated by the first identifier.

In some embodiments, receiving the first identifier and the first message sent by the first network function includes:
receiving a user plane connection release request and a second identifier sent by the terminal, where the second identifier is configured to identify the first information in the terminal;
mapping the second identifier to the first identifier, the first identifier being configured to identify the first information in the core network, and sending the user plane connection release request and the first identifier to the first network function indicated by the first identifier;
receiving the first identifier and the first message sent by the first network function, the first message being a user plane connection release response or a user plane connection release command.

In some embodiments, receiving the first identifier and the first message sent by the first network function includes:
receiving a user plane connection release request and a second identifier sent by a terminal, where the second identifier is configured to identify first information in the core network and the terminal;
using the second identifier as the first identifier, and sending the user plane connection release request and the first identifier to the first network function indicated by the first identifier;
receiving the first identifier and a first message sent by the first network function, where the first message is a user plane connection release response message or a user plane connection release command message.

In some embodiments, after receiving the first identifier and the first message sent by the first network function, the method further includes:
mapping the first identifier to a second identifier;
sending the second identifier and the first message to the terminal.

In some embodiments, after receiving the first identifier and the first message sent by the first network function, the method further includes:
using the first identifier as the second identifier;
sending the second identifier and the first message to the terminal.

In a third aspect, embodiments of the present disclosure provide a method for processing a user plane positioning connection, performed by a terminal. The method includes:
receiving a second identifier and a first message sent by a second network function;
where the first message is a message related to establishing a user plane connection or a message related to releasing a user plane connection;
the second identifier is determined based on a first identifier sent by a first network function, the first identifier is configured to identify first information, and the second identifier is configured to identify the first information in the terminal;
the first information is at least one of the first network function, the user plane connection, or a location service session between the first network function and the terminal.

In some embodiments of the third aspect, the first identifier is allocated by the first network function when it determines to establish a user plane connection for user plane positioning, or,
the first identifier is allocated by the second network function upon receipt of a user plane connection establishment request sent by the terminal.

In some embodiments, the first message is a user plane connection establishment command message, and the method further includes:
establishing a user plane connection for user plane positioning;
sending the second identifier and a user plane connection establishment complete message to the second network function.

In some embodiments, the first message is a user plane connection release command message, and the method further includes:
releasing the user plane connection used for user plane positioning; and
sending a second identifier and a user plane connection release complete message to the second network function.

In some embodiments, the first message is a user plane connection establishment command or a user plane connection establishment response.

Before receiving the second identifier and the first message sent by the second network function, the method further includes:
sending a user plane connection establishment request to the second network function.

In some embodiments, the first message is a user plane connection release command or a user plane connection release response.

Before receiving the second identifier and the first message sent by the second network function, the method further includes:
sending a user plane connection release request to the second network function.

In a fourth aspect, embodiments of the present disclosure provide a first network function, including:
a transceiver module, configured to send a first identifier and a first message to a second network function;
where the first message is a message related to establishing a user plane connection or a message related to releasing a user plane connection;
the first identifier is configured to identify first information, and the first information is at least one of the first network function, the user plane connection, or a location service session between the first network function and the terminal.

In a fifth aspect, embodiments of the present disclosure provide a second network function, including:
a transceiver module, configured to receive a first identifier and a first message sent by a first network function;
where the first message is a message related to establishing a user plane connection or a message related to releasing a user plane connection;
the first identifier is configured to identify first information, and the first information is at least one of the first network function, the user plane connection, or a location service session between the first network function and the terminal.

In a sixth aspect, embodiments of the present disclosure provide a terminal, including:
a transceiver module, configured to receive a second identifier and a first message sent by a second network function;
where the first message is a message related to establishing a user plane connection or a message related to releasing a user plane connection;
the second identifier is determined based on the first identifier sent by the first network function, the first identifier is configured to identify the first information, and the second identifier is configured to identify the first information in the terminal;
the first information is at least one of the first network function, the user plane connection, or a location service session between the first network function and the terminal.

In a seventh aspect, embodiments of the present disclosure provide a communication system including a first network function, a second network function, and a terminal; where the first network function is configured to perform the method described in the optional implementation of the first aspect, the second network function is configured to perform the method described in the optional implementation of the second aspect, and the terminal is configured to perform the method described in the optional implementation of the third aspect.

In an eighth aspect, embodiments of the present disclosure provide a storage medium storing instructions that, when executed on a communication device, cause the communication device to perform the method described in the optional implementation of the first, second, or third aspect.

In a ninth aspect, embodiments of the present disclosure provide a program product that, when executed by a communication device, causes the communication device to perform the method described in the optional implementation of the first, second, or third aspect.

In a tenth aspect, embodiments of the present disclosure provide a computer program that, when executed on a computer, causes the computer to perform the method described in the optional implementation of the first, second, or third aspect.

In an eleventh aspect, embodiments of the present disclosure provide a chip or chip system. The chip or chip system includes processing circuitry and is configured to perform the method described in the optional implementations of the first, second, or third aspects above.

It is understood that the first network function, second network function, terminal, communication system, storage medium, program product, computer program, chip, or chip system described above are all configured to perform the method proposed in the embodiments of the present disclosure. Therefore, the beneficial effects that can be achieved can be referred to the beneficial effects in the corresponding methods, and will not be repeated here.

The embodiments of the present disclosure provide a method for processing a user plane positioning connection, a first network function, a second network function, and a terminal. In some embodiments, the terms "a method for processing a user plane positioning connection" and "an information processing method", "a communication method", etc., can be interchanged; the terms "a device for processing a user plane positioning connection" and "an information processing device", "a communication device", etc., can be interchanged; and the terms "an information processing system", "a communication system" etc., can be interchanged.

The embodiments of the present disclosure are not exhaustive, but merely illustrative of some embodiments, and are not intended to limit the specific scope of protection of the present disclosure. Unless otherwise specified, each step in a particular embodiment can be implemented as an independent embodiment, and the steps can be arbitrarily combined. For example, a solution after removing some steps in a particular embodiment can also be implemented as an independent embodiment, and the order of the steps in a particular embodiment can be arbitrarily interchanged. Furthermore, the optional implementation methods in a particular embodiment can be arbitrarily combined; moreover, the embodiments can be arbitrarily combined with each other. For example, some or all steps of different embodiments can be arbitrarily combined, and a particular embodiment can be arbitrarily combined with optional implementation methods of other embodiments.

In each embodiment of the present disclosure, unless otherwise specified or there is a logical conflict, the terminology and/or descriptions between the embodiments are consistent and can be mutually referenced. Technical features in different embodiments can be combined to form new embodiments according to their inherent logical relationships.

The terminology used in the embodiments of the present disclosure is only for the purpose of describing specific embodiments and is not intended to limit the present disclosure.

In the embodiments of the present disclosure, unless otherwise stated, elements expressed in the singular form, such as "a", "an", "the", "the above mentioned", "said", "the aforementioned", "this", etc., can mean "one and only one", or "one or more", "at least one", etc. For example, when using articles such as "a", "an", "the", etc., in translation, the noun following the article can be understood as either a singular or a plural expression.

In embodiments of the present disclosure, "multiple" refers to two or more.

In some embodiments, terms such as "at least one of", "one or more", "a plurality", "multiple", etc. can be used interchangeably.

In some embodiments, the notation "at least one of A and B", "A and/or B", "A in one case, B in another", "in response to one case A, in response to another case B", etc. may depending on the context, include the following technical solutions: in some embodiments, A (executed independently of B); in some embodiments, B (executed independently of A); in some embodiments, execution is selected from A and B (A and B are selectively executed); in some embodiments, both A and B are executed. The same applies when there are more branches such as A, B, and C.

In some embodiments, the notation "A or B", etc. may, depending on the context, include the following technical solutions: in some embodiments, A (executed independently of B); in some embodiments, B (executed independently of A); in some embodiments, execution is selected from A and B (A and B are selectively executed). The same applies when there are more branches such as A, B, and C.

The prefixes "first", "second", etc., in the embodiments of the present disclosure are merely for distinguishing different descriptive objects and do not impose restrictions on the position, order, priority, quantity, or content of the descriptive objects. The description of the descriptive objects should be found in the claims or the context of the embodiments, and the use of prefixes should not constitute unnecessary restrictions. For example, if the descriptive object is a "field", then the ordinal numbers before "field" in "first field" and "second field" do not restrict the position or order of the "fields". The "first" and "second" do not restrict whether the "fields" they modify are in the same message, nor do they restrict the order of "first field" and "second field". Similarly, if the descriptive object is a "level", then the ordinal numbers before "level" in "first level" and "second level" do not restrict the priority between "levels". Furthermore, the number of descriptive objects is not limited by ordinal numbers and can be one or more. Taking "first device" as an example, where the number of "device" may be one or more. Furthermore, the objects modified by different prefixes can be the same or different. For example, if the object being described is "device", then "first device" and "second device" can be the same device or different devices, and their types can be the same or different; similarly, if the object being described is "information", then "first information" and "second information" can be the same information or different information, and their content can be the same or different.

In some embodiments, "including A", "containing A", "for indicating A" and "carrying A" can be interpreted as directly carrying A or indirectly indicating A.

In some embodiments, terms such as "in response to...", "in response to determining...", "in the case of...", "when...", "upon ...", "if...", etc. can be interchanged.

In some embodiments, terms such as "greater than", "greater than or equal to", "not smaller than", "more than", "more than or equal to", "not less than", "higher than", "higher than or equal to", "not lower than", "above", etc. can be used interchangeably. Terms such as "smaller than", "smaller than or equal to", "not greater than", "less than", "less than or equal to", "not more than", "lower than", "lower than or equal to", "not higher than", "below", etc. can be used interchangeably.

In some embodiments, "device" can be interpreted as physical or virtual, and its name is not limited to the names described in the embodiments. Terms such as "apparatus", "equipment", "device", "circuit", "network function", "node", "function", "unit", "section", "system", "network", "chip", "chip system", "entity", "main body", etc. can be used interchangeably.

In some embodiments, "network" can be interpreted as devices included in the network (e.g., access network device, core network device, etc.).

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc. are interchangeable.

In some embodiments, the terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, etc. are used interchangeably.

In some embodiments, an access network device, a core network device, or a network device can be replaced with a terminal. For example, various embodiments of the present disclosure can also be applied to structures where communication between access network device, core network device, or network device and terminals is replaced with communication between multiple terminals (e.g., device-to-device (D2D), vehicle-to-everything (V2X), etc.). In this case, the structure can also be configured such that the terminal has all or part of the functions of the access network device. Furthermore, terms such as "uplink", "downlink", etc. can be replaced with terms corresponding to communication between terminals (e.g., "sidelink"). For example, uplink channel, downlink channel, etc., can be replaced with sidelink channel, and uplink link, downlink, etc., can be replaced with sidelink.

In some embodiments, the terminal can be replaced by an access network device, a core network device, or a network device. In this case, it can also be configured such that the access network device, core network device, or network device has all or part of the functions of the terminal.

In some embodiments, the acquisition of data, information, etc., may comply with the laws and regulations of the country where the location is situated.

In some embodiments, data, information, etc., may be acquired after obtaining the user's consent.

Furthermore, each element, each row, or each column in the tables of embodiments of the present disclosure can be implemented as an independent embodiment, and a combination of any element, any row, or any column can also be implemented as an independent embodiment.

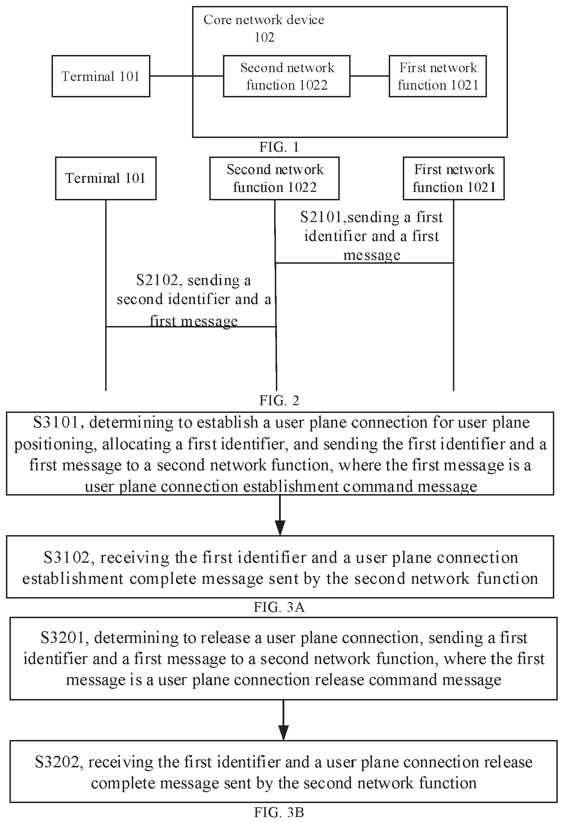

FIG. 1 is a schematic diagram of an architecture of a communication system according to an embodiment of the present disclosure. As shown in FIG. 1, the communication system 100 includes a terminal 101 and a network device 102.

In some embodiments, the network device 102 may include an access network device and a core network device.

In some embodiments, the access network device is, for example, a node or device that connects a terminal to a wireless network. The access network device may include, but is not limited to, at least one of the following: evolved Node B (eNB) in a 5G communication system, next-generation evolved Node B (ng-eNB), next-generation Node B (gNB), node B (NB), home node B (HNB), home evolved node B (HeNB), radio backhaul device, radio network controller (RNC), base station controller (BSC), base transceiver station (BTS), base band unit (BBU), mobile switching center, base station in a 6G communication system, open RAN, cloud RAN, base station in other communication systems, and access node in a Wi-Fi system.

In some embodiments, the technical solutions of the present disclosure are applicable to Open RAN architectures. In this case, the interfaces between or within access network devices involved in the embodiments of the present disclosure can become internal interfaces of Open RAN. The processes and information interactions between these internal interfaces can be implemented through software or programs.

In some embodiments, the access network device can be composed of a central unit (CU) and distributed units (DUs). The CU can also be called a control unit. Using a CU-DU structure can separate the protocol layers of the access network device. Some protocol layer functions are centrally controlled by the CU, while the remaining part or all protocol layer functions are distributed in the DUs, and the CU centrally controls the DUs. However, this is not a limitation.

In some embodiments, the core network device can be a single device, including a first network function 1021 and a second network function 1022, etc., or it can be multiple devices or a group of devices, each including all or part of the first network function 1021 and the second network function 1022, etc. Network functions can be virtual or physical. The core network includes, for example, at least one of the Evolved Packet Core (EPC), 5G Core Network (5GCN), and Next Generation Core (NGC).

In some embodiments, the first network function 1021 may be, for example, an LMF network function or a Sensing Function (SF) network function.

In some embodiments, the second network function 1022 may be, for example, an AMF network function.

It is understood that the communication system described in the embodiments of the present disclosure is for the purpose of more clearly illustrating the technical solutions of the embodiments of the present disclosure, and does not constitute a limitation on the technical solutions proposed in the embodiments of the present disclosure. Those skilled in the art will recognize that, with the evolution of system architecture and the emergence of new service scenarios, the technical solutions proposed in the embodiments of the present disclosure are also applicable to similar technical problems.

The following embodiments of the present disclosure can be applied to the communication system 100 shown in FIG. 1, or part of its main components, but are not limited thereto. The entities shown in FIG. 1 are illustrative. The communication system may include all or some of the entities in FIG. 1, or it may include other entities outside of FIG. 1. The number and form of each entity are arbitrary. Each entity may be physical or virtual. The connection relationship between the entities is illustrative. Entities may not be connected to each other or may be connected in any way. The connection may be direct or indirect, wired or wireless.

The embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (Registered Trademark)), CDMA2000, Ultra Mobile Broadband (UMB), IEEE 802.11 (Wi-Fi (Registered Trademark)), IEEE 802.16 (WiMAX (Registered Trademark)), and IEEE 802.20, Ultra-Wideband (UWB), Bluetooth (Registered Trademark), Public Land Mobile Network (PLMN) networks, Device-to-Device (D2D) systems, Machine-to-Machine (M2M) systems, Internet of Things (IoT) systems, Vehicle-to-Everything (V2X) systems, systems utilizing other communication methods, and next-generation systems extended from them, etc. Furthermore, multiple systems can be combined (e.g., a combination of LTE or LTE-A with 5G, etc.).

In some embodiments, a first network function or terminal can trigger the establishment of a user plane connection. The terminal and the first network function can maintain the established user plane connection. The first network function can modify or terminate the user plane connection established between the terminal and the first network function.

The first network function can send its user plane information (e.g., IP address or Fully Qualified Domain Name (FQDN)) to the terminal via the DL NAS TRANSPORT message of the second network function. If the first network function sends its FQDN to the terminal, a DNS server or resolver is used to resolve the IP address of the first network function, such as the Edge Application Server Discovery Function (EASDF) or the Domain Name System (DNS) for address resolution of the local first network function. The terminal uses a UE route selection policy (URSP) that includes user plane positioning-related Protocol Data Unit (PDU) session parameters (e.g., dedicated Domain Name Network (DNN) and Single Network Slice Selection Assistance Information (S-NSSAI)) to establish a PDU session for user plane positioning. The SMF should select the PSA-UPF (located at the central site or local site) connected to the first network function for this PDU session based on S-NSSAI, DNN, terminal location information, etc.

Positioning signaling via the user plane has several advantages, such as:
It has more efficient communication overload due to the direct connection from the LCS server to the terminal;
It may not require gNodeB, AMF, or LMF signaling processing of the RRC, NG-AP, and HTTP/2 protocol stacks. A single session can handle all transactions;
Depending on terminal support, it can have multiple options. For example, 3GPP LPP and OMA LPP are both possible in the selection of positioning methods.

In some embodiments, the correlation ID is an internal ID within the core network and can only be used within the core network, while the routing ID can be used at the terminal.

In some embodiments, the routing ID and the correlation ID can be different terms for the same identifier. In some embodiments, the term "correlation ID" is used as an identifier in service operations between the first network function and the second network function, while the term "routing ID" is used as an identifier in NAS messages sent through the N1 reference point between the terminal and the second network function.

In some embodiments, in an LCS-related process, the correlation ID (or routing ID) is used between the first network function, the second network function, and the terminal to identify the first network function and the LCS session between the first network function and the terminal. For example, when the second network function receives a message and a routing ID from the terminal, the second network function can map the routing ID to the correlation ID and send the message to the first network function identified by the correlation ID.

In some embodiments, a UPP-CM process initiated by a network includes:
the network initiating user plane connection establishment:
the network sending a user plane connection establishment command message to a terminal;
the terminal sending a user plane connection establishment complete message to the network;
the network initiating user plane connection release:
   the network sending a user plane connection release command message to the terminal;
   the terminal sending a user plane connection release complete message to the network;
   a UPP-CM process initiated by a terminal includes:
      the terminal initiating user plane connection establishment:
      the terminal sending a user plane connection establishment request to the network;
      the network sends a user plane connection establishment response message or a user plane connection establishment command message to the terminal;
      the terminal initiating user plane connection release:
         the terminal sending a user plane connection release request to the network;
         the network sending a user plane connection release response message or a user plane connection release command message to the terminal;
         the above UPP-CM messages are included in the UPP-CMI container of UL/DL NAS TRANSPORT message and transmitted between the UE and LMF via the AMF.

FIG. 2 is an interactive schematic diagram of a method for processing a user plane positioning connection according to an embodiment of the present disclosure. As shown in FIG. 2, the embodiment of the present disclosure relates to a method for processing a user plane positioning connection, for a communication system 100. The method includes:

Step S2101: a first network function 1021 sends a first identifier and a first message to a second network function 1022.

In some embodiments, the second network function 1022 receives the first identifier and the first message.

In some embodiments, the first message is a message related to establishing a user plane connection or a message related to releasing a user plane connection.

In some embodiments, the first message is a user plane connection establishment command message, a user plane connection establishment response message, a user plane connection release command message, or a user plane connection release response message.

In some embodiments, a first identifier is configured to identify first information, and the first information is at least one of a first network function, a user plane connection, or a location service session between the first network function and the terminal.

In some embodiments, the first identifier may be configured only to identify the first information in the core network, or it may be configured to identify the first information in the core network, and the terminal. It should be understood that if the first identifier is only configured to identify the first information in the core network, then if a second network function sends the first identifier to the terminal, the terminal cannot determine the first information identified by the first identifier based on the first identifier. Similarly, if the first identifier can be configured to identify the first information in the core network and the terminal, then if the second network function sends the first identifier to the terminal, the terminal can determine the first information identified by the first identifier based on the first identifier.

In some embodiments, when the first identifier is configured to identify the first network function, the first identifier can be the IP address of the first network function, a correlation ID, etc. Since both the core network device and the terminal can determine the first network function based on its IP address, if the first identifier is the IP address of the first network function, it indicates that the first identifier is configured to identify the first network function in the core network and the terminal. The correlation ID is only configured to identify the first network function in the core network, so if the first identifier is a correlation ID, it indicates that the first identifier is configured to identify the first network function in the core network.

In the embodiment of the present disclosure, when the first network function sends a first message to the second network function, it further sends a first identifier configured to identify the first information. This allows the second network function to forward the first message to the first network function associated with the terminal and helps the terminal identify the first network function.

The UPP-CM process in the embodiment of the present disclosure includes establishing a user plane connection and releasing the user plane connection. Since the initiator of the UPP-CM process can be either the network or the terminal, the UPP-CM process in the embodiment of the present disclosure can include four schemes. Step S2101 is described in detail below for each scheme.

### Scheme 1 Network Initiation of User Plane Connection

Step S2101 may include: a first network function determines to establish a user plane connection for user plane positioning, allocates a first identifier, and sends the first identifier and a first message to a second network function. The first message is a user plane connection establishment command message.

That is, when a user plane connection is initiated by the network, the first identifier in step S2101 is allocated by the first network function.

In some embodiments, the first network function may invoke an Namf_Communication_N1N2MessageTransfer to the second network function to transfer the user plane connection establishment command message and the first identifier.

### Scheme Two: Terminal Initiation of User Plane Connection

Step S2101 may include:
Method 1) The terminal sends a user plane connection establishment request to the second network function, the second network function sends the user plane connection establishment request to the first network function, the first network function accepts the user plane connection establishment request, determines to establish a user plane connection for user plane positioning, allocates a first identifier, and sends the first identifier and a first message to the second network function. The first message is a user plane connection establishment command message or a user plane connection establishment response message.
Method 2) The terminal sends a user plane connection establishment request to the second network function. The second network function allocates a first identifier and sends the user plane connection establishment request and the first identifier to the first network function. The first network function accepts the user plane connection establishment request, determines to establish a user plane connection for user plane positioning, and sends the first identifier and a first message to the second network function. The first message is either a user plane connection establishment command message or a user plane connection establishment response message.

In other words, when the terminal initiates a user plane connection, the first identifier can be allocated by either the first network function or the second network function. That is, the first identifier can be allocated by the first network function when it determines to establish a user plane connection for user plane positioning, or the first identifier can be allocated by the second network function based on receiving the user plane connection establishment request sent by the terminal.

In some embodiments, the terminal sending the user plane connection establishment request to the second network function specifically involves:
the terminal setting the payload container type of the UL NAS TRASPORT message to "UPP-CMI container" and including the user plane connection establishment request in the payload container of the UL NAS TRASPORT message.

### Scheme 3: Network Initiation of User Plane Connection Release

Step S2101 may include: a first network function determining to release the user plane connection, and sending a first identifier and a first message to a second network function, where the first message is a user plane connection release command.

It should be noted that user plane connection release and user plane connection establishment are two relatively independent schemes. That is, regardless of whether the user plane connection is initiated by the network or the terminal, the network can initiate the user plane connection release. Furthermore, in the user plane connection release scheme, the first identifier sent by the first network function to the second network function can be allocated by the first network function during the user plane connection establishment process, or it can be allocated by the second network function during the user plane connection establishment process.

In some embodiments, the first network function may invoke an Namf_Communication_N1N2MessageTransfer to the second network function to transfer the user plane connection release command message and the first identifier.

### Scheme 4: Terminal Initiation of User Plane Connection Release

Step S2101 may include: the terminal sending a user plane connection release request and a second identifier to the second network function; the second network function sending the user plane connection release request and the first identifier to the first network function; the first network function accepting the user plane connection release request, determining to release the user plane connection, and sending the first identifier and a first message to the second network function, where the first message is a user plane connection release response message or a user plane connection release command message.

In some embodiments, the second identifier is configured to identify first information in the terminal.

In this scheme, the first identifier sent by the second network function to the first network function may be allocated by the first network function during the user plane connection establishment process, or it may be allocated by the second network function during the user plane connection establishment process.

In some embodiments, the terminal sending the user plane connection release request and the second identifier to the second network function specifically involves:
the terminal setting the payload container type of the UL NAS TRASPORT message to "UPP-CMI container", including the user plane connection release request in the payload container, including the second identifier in the additional information of the UL NAS TRASPORT message, and the terminal sending the DL NAS TRASPORT message to the second network function.

Step S2102: The second network function 1022 sends a second identifier and a first message to the terminal 101.

In some embodiments, the terminal 101 receives the second identifier and the first message.

In some embodiments, the second identifier is configured to identify the first information in the terminal. As can be seen from the above embodiments, the first identifier in the embodiments of the present disclosure can be configured to identify the first information in the core network, or it can be configured to identify the first information in both the core network and the terminal. Therefore, depending on the different first identifiers, the second network function sending the second identifier and the first message to the terminal includes two cases:
Case 1: The first identifier is configured to identify the first information in the core network. The second network function maps the first identifier to a second identifier, and the second identifier is configured to identify the first information in the terminal. The second identifier and the first message are sent to the terminal.
Case 2: The first identifier is configured to identify the first information in both the core network and the terminal. The second network function uses the first identifier as the second identifier and sends the second identifier and the first message to the terminal.

The UPP-CM process in the embodiment of the present disclosure includes establishing a user plane connection and releasing the user plane connection. Since the initiator of the UPP-CM process can be either the network or the terminal, the UPP-CM process in the embodiment of the present disclosure can include four schemes. Step S2102 and its subsequent processes are described in detail below for each scheme.

### Scheme 1: Network Initiation of User Plane Connection

When the second network function receives a first identifier and a user plane connection establishment command message sent by the first network function, where the first identifier is configured to identify first information in the core network, step S2102 specifically involves:
the second network function mapping the first identifier to a second identifier, where the second identifier is configured to identify the first information in the terminal; the second network function setting the payload container type of the DL NAS TRASPORT message to "UPP-CMI container", including the user plane connection establishment command message in the payload container, including the second identifier in the additional information of the DL NAS TRASPORT message, and sending the DL NAS TRASPORT message to the terminal.

Further, after step S2102, the terminal establishes a user plane connection for user plane positioning, sends a second identifier and a user plane connection establishment complete message to the second network function, the second network function maps the second identifier to a first identifier, and sends the user plane connection establishment complete message and the first identifier to the first network function indicated by the first identifier.

In some embodiments, the terminal sending the second identifier and the user plane connection establishment complete message to the second network function specifically involves:
the terminal setting the payload container type of the UL NAS TRASPORT message to "UPP-CMI container", including the user plane connection establishment complete message in the payload container, including the second identifier in the additional information of the UL NAS TRASPORT message, and sending the UL NAS TRASPORT message to the second network function.

In some embodiments, the second network function sending the user plane connection establishment complete message and the first identifier to the first network function indicated by the first identifier specifically involves:
the second network function invoking a Namf_Communication_N1MessageNotify message to the first network function indicated by the first identifier, this message including the user plane connection establishment complete message and the first identifier.

When the second network function receives the first identifier and user plane connection establishment command message sent by the first network function, where the first identifier is configured to identify first information in the core network and the terminal, step S2102 specifically involves:
the second network function uses the first identifier as the second identifier; the second network function sets the payload container type of the DL NAS TRASPORT message to "UPP-CMI container"; includes the user plane connection establishment command message in the payload container; includes the second identifier in the additional information of the DL NAS TRASPORT message; and the second network function sends the DL NAS TRASPORT message to the terminal.

Furthermore, after step S2102, the terminal establishes a user plane connection for user plane positioning, sends the second identifier and a user plane connection establishment complete message to the second network function; the second network function uses the second identifier as the first identifier and sends the user plane connection establishment complete message and the first identifier to the first network function indicated by the first identifier.

In some embodiments, the terminal sending a second identifier and a user plane connection establishment complete message to the second network function specifically involves:
the terminal sets the payload container type of the UL NAS TRASPORT message to "UPP-CMI container", includes the user plane connection establishment complete message in the payload container, includes the second identifier in the additional information of the UL NAS TRASPORT message, and then sends the UL NAS TRASPORT message to the second network function.

In some embodiments, the second network function sending a user plane connection establishment complete message and the first identifier to the first network function indicated by the first identifier specifically involves:
the second network function invokes a Namf_Communication_N1MessageNotify message to the first network function indicated by the first identifier. This message includes the user plane connection establishment complete message and the first identifier.

### Scheme 2: Terminal Initiation of User Plane Connection

When the second network function receives a first identifier and a user plane connection establishment command message (or a user plane connection establishment response message) sent by the first network function, where the first identifier is configured to identify the first information in the core network, Step S2102 specifically involves:
the second network function maps the first identifier to a second identifier. The second identifier is configured to identify the first information in the terminal. The second network function then sends the second identifier and the user plane connection establishment command message (or the user plane connection establishment response message) to the terminal.

When the second network function receives a first identifier and a user plane connection establishment command message (or the user plane connection establishment response message) sent by the first network function, where the first identifier is configured to identify the first information in the core network and the terminal, Step S2102 specifically involves:
The second network function uses the first identifier as the second identifier and sends the second identifier and the user plane connection establishment command message (or the user plane connection establishment response message) to the terminal.

Furthermore, after step S2102, the terminal establishes a user plane connection with the first network function.

### Scheme 3: Network Initiation of User Plane Connection Release

When the second network function receives the first identifier and user plane connection release command message sent by the first network function, where the first identifier is configured to identify first information in the core network, step S2102 specifically involves:
The second network function maps the first identifier to a second identifier, and the second identifier is configured to identify the first information in the terminal. The second network function sets the payload container type of the DL NAS TRASPORT message to "UPP-CMI container", includes the user plane connection establishment command message in the payload container, includes the second identifier in the additional information of the DL NAS TRASPORT message, and sends the DL NAS TRASPORT message to the terminal.

Furthermore, after step S2102, the terminal releases the user plane connection used for user plane positioning, sends the second identifier and a user plane connection release complete message to the second network function, the second network function maps the second identifier to the first identifier, and sends the user plane connection release complete message and the first identifier to the first network function indicated by the first identifier.

In some embodiments, the terminal sending the second identifier and the user plane connection release complete message to the second network function specifically involves:
The terminal sets the payload container type of the UL NAS TRASPORT message to "UPP-CMI container", includes the user plane connection release complete message in the payload container, includes the second identifier in the additional information of the UL NAS TRASPORT message, and then sends the UL NAS TRASPORT message to the second network function.

In some embodiments, the second network function sending the user plane connection release complete message and the first identifier to the first network function indicated by the first identifier specifically involves:
The second network function invokes a Namf_Communication_N1MessageNotify message to the first network function indicated by the first identifier. This message includes the user plane connection release complete message and the first identifier.

When the second network function receives the first identifier and user plane connection release command message sent by the first network function, where the first identifier is configured to identify first information in the core network and the terminal, step S2102 specifically involves:
The second network function uses the first identifier as the second identifier; the second network function sets the payload container type of the DL NAS TRASPORT message to "UPP-CMI container"; includes the user plane connection release command message in the payload container; includes the second identifier in the additional information of the DL NAS TRASPORT message; and the second network function sends the DL NAS TRASPORT message to the terminal.

Furthermore, after step S2102, the terminal releases the user plane connection for user plane positioning, sends the second identifier and a user plane connection establishment complete message to the second network function; the second network function uses the second identifier as the first identifier and sends the user plane connection release complete message and the first identifier to the first network function indicated by the first identifier.

In some embodiments, the terminal sending the second identifier and the user plane connection release complete message to the second network function specifically involves:
The terminal sets the payload container type of the UL NAS TRASPORT message to "UPP-CMI container", includes the user plane connection release complete message in the payload container, includes the second identifier in the additional information of the UL NAS TRASPORT message, and then sends the UL NAS TRASPORT message to the second network function.

In some embodiments, the second network function sending the user plane connection release complete message and the first identifier to the first network function indicated by the first identifier specifically involves:
The second network function invokes a Namf_Communication_N1MessageNotify message to the first network function indicated by the first identifier. This message includes the user plane connection release complete message and the first identifier.

### Scheme 4: Terminal Initiation of User Plane Connection Release

When the second network function receives a first identifier and a user plane connection release command message (or user plane connection release response message) sent by the first network function, where the first identifier is configured to identify the first information in the core network, step S2102 specifically involves:
The second network function maps the first identifier to a second identifier, and the second identifier is configured to identify the first information in the terminal. The second identifier is then sent to the terminal along with the user plane connection release command message (or user plane connection release response message).

When the second network function receives the first identifier and the user plane connection release command message (or user plane connection release response message) sent by the first network function, where the first identifier is configured to identify the first information in both the core network and the terminal, step S2102 specifically involves:
The second network function uses the first identifier as the second identifier and sends the second identifier and the user plane connection release command message (or user plane connection release response message) to the terminal.

Furthermore, after step S2102, the terminal releases the user plane connection with the first network function.

In some embodiments, the processing logic of the second network function may include:
For the UPP-CMI container:
If the additional information (i.e., the second identifier) contained in the Additional Information IE is included in the UL NAS TRANSPORT message, then the payload container type and the contents of the UPP-CMI container are sent to the first network function associated with the second identifier contained in the Additional Information IE of the UL NAS TRANSPORT message. Optionally, the second identifier of the Additional Information IE is converted to a first identifier, and the contents of the UPP-CMI container and the first identifier are sent to the first network function associated with the second identifier contained in the Additional Information IE of the UL NAS TRANSPORT message (e.g., via a Namf_Communication_N1MessageNotify message).

If the additional information (i.e., the second identifier) contained in the Additional Information IE is not included in the UL NAS TRANSPORT, operations related to the content of the UPP-CMI container (e.g., first network function selection and/or first identifier allocation) will be performed, and the payload container type and the content of the UPP-CMI container will be sent to the selected first network function. Optionally, the second identifier of the Additional Information IE will be converted to the first identifier, and at least one of the payload container type, the content of the UPP-CMI container, and the first identifier is sent to the selected first network function (via the Nlmf_Location_UPConfig message).

The communication method involved in the embodiments of the present disclosure may include at least one of steps S2101 and S2102. For example, step S2101 may be implemented as a standalone embodiment, step S2102 may be implemented as a standalone embodiment, and steps S2101+S2102 may be implemented as standalone embodiments, but are not limited thereto.

In some embodiments, steps S2101 and S2102 may be performed in an interchangeable order or simultaneously.

In some embodiments, step S2101 is optional, and one or more of these steps may be omitted or substituted in different embodiments.

In some embodiments, step S2102 is optional, and one or more of these steps may be omitted or substituted in different embodiments.

FIG. 3A is a flowchart illustrating a method for processing a user plane positioning connection according to an embodiment of the present disclosure. As shown in FIG. 3A, the embodiment of the present disclosure relates to a first network function, and the above method includes:
S3101: Determining to establish a user plane connection for user plane positioning, allocating a first identifier, and sending the first identifier and a first message to a second network function, where the first message is a user plane connection establishment command message.

Optional implementations of step S3101 can be found in the optional implementations of steps S2101 and S2102 in FIG. 2, and other related parts in the embodiments involved in FIG. 2, which will not be repeated here.

S3102: Receiving the first identifier and a user plane connection establishment complete message sent by the second network function.

Optional implementations of step S3102 can be found in the optional implementations of steps S2101 and S2102 in FIG. 2, and other related parts in the embodiments involved in FIG. 2, which will not be repeated here.

In some embodiments, steps S3101 and S3102 can be interchanged or executed simultaneously.

In some embodiments, step S3101 is optional, and one or more of these steps can be omitted or substituted in different embodiments.

In some embodiments, step S3102 is optional, and one or more of these steps can be omitted or substituted in different embodiments.

FIG. 3B is a flowchart illustrating a method for processing a user plane positioning connection according to an embodiment of the present disclosure. As shown in FIG. 3B, the embodiment of the present disclosure relates to a first network function, and the above method includes:
S3201, determining to release a user plane connection, sending a first identifier and a first message to a second network function, where the first message is a user plane connection release command message.

Optional implementations of step S3201 can be found in steps S2101 and S2102 of FIG. 2, optional implementations of steps S3101 and S3102 of FIG. 3A, and other related parts in the embodiments involved in FIGs. 2 and 3A, which will not be repeated here.

S3202: Receiving the first identifier and a user plane connection release complete message sent by the second network function.

Optional implementations of step S3202 can be found in steps S2101 and S2102 of FIG. 2, optional implementations of steps S3101 and S3102 of FIG. 3A, and other related parts in the embodiments involved in FIGs. 2 and 3A, which will not be repeated here.

In some embodiments, steps S3201 and S3202 can be interchanged or executed simultaneously.

In some embodiments, step S3201 is optional, and one or more of these steps can be omitted or substituted in different embodiments.

In some embodiments, step S3202 is optional, and one or more of these steps can be omitted or substituted in different embodiments.

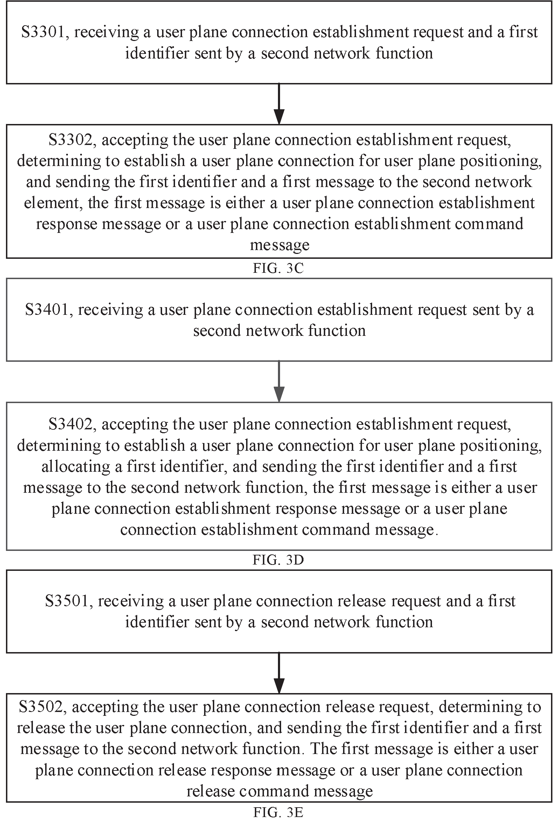

FIG. 3C is a flowchart illustrating a method for processing a user plane positioning connection according to an embodiment of the present disclosure. As shown in FIG. 3C, the embodiment of the present disclosure involves a first network function, and the above method includes:
S3301: Receiving a user plane connection establishment request and a first identifier sent by a second network function.

Optional implementations of step S3301 can be found in steps S2101 and S2102 of FIG. 2, steps S3101 and S3102 of FIG. 3A, steps S3201 and S3202 of FIG. 3B, and other related parts in the embodiments involved in FIGs. 2, 3A, and 3B, which will not be repeated here.

S3302: Accepting the user plane connection establishment request, determining to establish a user plane connection for user plane positioning, and sending the first identifier and a first message to the second network function. The first message is either a user plane connection establishment response message or a user plane connection establishment command message.

Optional implementations of step S3302 can be found in the optional implementations of steps S2101 and S2102 in FIG. 2, steps S3101 and S3102 in FIG. 3A, steps S3201 and S3202 in FIG. 3B, and other related parts in the embodiments involved in FIGs. 2, 3A, and 3B, which will not be repeated here.

In some embodiments, steps S3301 and S3302 can be interchanged or executed simultaneously.

In some embodiments, step S3301 is optional, and one or more of these steps can be omitted or substituted in different embodiments.

In some embodiments, step S3302 is optional, and one or more of these steps can be omitted or substituted in different embodiments.

FIG. 3D is a flowchart illustrating a method for processing a user plane positioning connection according to an embodiment of the present disclosure. As shown in FIG. 3D, the embodiment of the present disclosure relates to a first network function, and the above method includes:
S3401, receiving a user plane connection establishment request sent by a second network function.

Optional implementations of step S3401 can be found in steps S2101 and S2102 of FIG. 2, steps S3101 and S3102 of FIG. 3A, steps S3201 and S3202 of FIG. 3B, and steps S3301 and S3302 of FIG. 3C, as well as other related parts in the embodiments involved in FIGs. 2, 3A, 3B, and 3C, which will not be repeated here.

S3402: Accepting the user plane connection establishment request, determining to establish a user plane connection for user plane positioning, allocating a first identifier, and sending the first identifier and a first message to the second network function. The first message is either a user plane connection establishment response message or a user plane connection establishment command message.

Optional implementations of step S3402 can be found in the optional implementations of steps S2101 and S2102 in FIG. 2, steps S3101 and S3102 in FIG. 3A, steps S3201 and S3202 in FIG. 3B, steps S3301 and S3302 in FIG. 3C, and other related parts in the embodiments involved in FIGs. 2, 3A, 3B, and 3C, which will not be repeated here.

In some embodiments, steps S3401 and S3402 can be interchanged or executed simultaneously.

In some embodiments, step S3401 is optional, and one or more of these steps can be omitted or substituted in different embodiments.

In some embodiments, step S3402 is optional, and one or more of these steps can be omitted or substituted in different embodiments.

FIG. 3E is a schematic flowchart illustrating a method for processing a user plane positioning connection according to an embodiment of the present disclosure. As shown in FIG. 3E, the embodiment of the present disclosure relates to a first network function. The above method includes:
S3501: Receiving a user plane connection release request and a first identifier sent by a second network function.

Optional implementations of step S3501 can be found in steps S2101 and S2102 of FIG. 2, steps S3101 and S3102 of FIG. 3A, steps S3201 and S3202 of FIG. 3B, steps S3301 and S3302 of FIG. 3C, and steps S3401 and S3402 of FIG. 3D, as well as other related parts in the embodiments involved in FIGs. 2, 3A, 3B, 3C, and 3D. These will not be repeated here.

S3502: Accepting the user plane connection release request, determining to release the user plane connection, and sending the first identifier and a first message to the second network function. The first message is either a user plane connection release response message or a user plane connection release command message.

Optional implementations of step S3502 can be found in the optional implementations of steps S2101 and S2102 in FIG. 2, steps S3101 and S3102 in FIG. 3A, steps S3201 and S3202 in FIG. 3B, steps S3301 and S3302 in FIG. 3C, steps S3401 and S3402 in FIG. 3D, and other related parts in the embodiments involved in FIGs. 2, 3A, 3B, 3C, and 3D, which will not be repeated here.

In some embodiments, steps S3501 and S3502 can be interchanged or executed simultaneously.

In some embodiments, step S3501 is optional, and one or more of these steps can be omitted or substituted in different embodiments.

In some embodiments, step S3502 is optional, and one or more of these steps can be omitted or substituted in different embodiments.

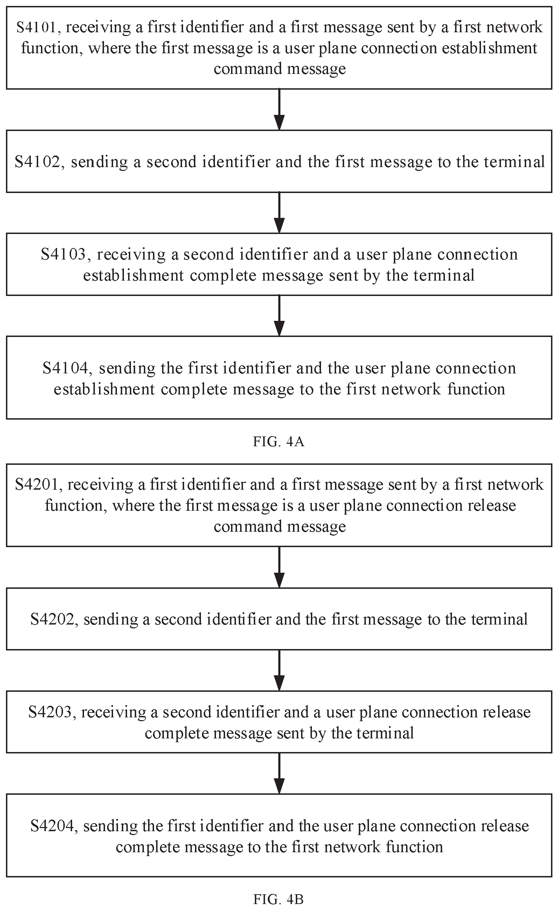

FIG. 4A is a schematic flowchart of a method for processing a user plane positioning connection according to an embodiment of the present disclosure. As shown in FIG. 4A, the embodiment of the present disclosure relates to a second network function. The above method includes:
S4101: Receiving a first identifier and a first message sent by a first network function, where the first message is a user plane connection establishment command message.

Optional implementations of step S4101 can be found in other related parts of the embodiments involved in FIGs. 2, 3A-3E, and will not be repeated here.

S4102: Sending a second identifier and the first message to the terminal.

Optional implementations of step S4102 can be found in other related parts of the embodiments involved in FIGs. 2,3A-3E, and will not be repeated here.

S4103: Receiving a second identifier and a user plane connection establishment complete message sent by the terminal.

Optional implementations of step S4103 can be found in other related parts of the embodiments involved in FIGs. 2, 3A-3E, and will not be repeated here.

S4104: Sending the first identifier and the user plane connection establishment complete message to the first network function.

Optional implementations of step S4104 can be found in other related parts of the embodiments illustrated in FIGs. 2, 3A-3E, and will not be repeated here.

In some embodiments, steps S4101 and S4102 can be interchanged or executed simultaneously. Steps S4103 and S4104 can be interchanged or executed simultaneously.

In some embodiments, step S4101 is optional, and one or more of these steps can be omitted or substituted in different embodiments.

In some embodiments, step S4102 is optional, and one or more of these steps can be omitted or substituted in different embodiments.

In some embodiments, step S4103 is optional, and one or more of these steps can be omitted or substituted in different embodiments.

In some embodiments, step S4104 is optional, and one or more of these steps can be omitted or substituted in different embodiments.

FIG. 4B is a schematic flowchart of a method for processing a user plane positioning connection according to an embodiment of the present disclosure. As shown in FIG. 4B, the embodiment of the present disclosure relates to a second network function. The above method includes:
S4201: Receiving a first identifier and a first message sent by a first network function, where the first message is a user plane connection release command message.

Optional implementations of step S4201 can be found in other related parts of the embodiments involved in FIGs. 2, 3A-3E, and 4A, and will not be repeated here.

S4202: Sending a second identifier and the first message to the terminal.

Optional implementations of step S4202 can be found in other related parts of the embodiments involved in FIGs. 2, 3A-3E, and 4A, and will not be repeated here.

S4203: Receiving a second identifier and a user plane connection release complete message sent by the terminal.

Optional implementations of step S4203 can be found in other related parts of the embodiments involved in FIGs. 2, 3A-3E, and 4A, and will not be repeated here.

S4204: Sending the first identifier and the user plane connection release complete message to the first network function.

Optional implementations of step S4204 can be found in other related parts of the embodiments illustrated in FIGs. 2, 3A-3E, and 4A, and will not be repeated here.

In some embodiments, steps S4201 and S4202 can be interchanged or executed simultaneously. Steps S4203 and S4204 can be interchanged or executed simultaneously.

In some embodiments, step S4201 is optional, and one or more of these steps can be omitted or substituted in different embodiments.

In some embodiments, step S4202 is optional, and one or more of these steps can be omitted or substituted in different embodiments.

In some embodiments, step S4203 is optional, and one or more of these steps can be omitted or substituted in different embodiments.

In some embodiments, step S4204 is optional, and one or more of these steps can be omitted or substituted in different embodiments.

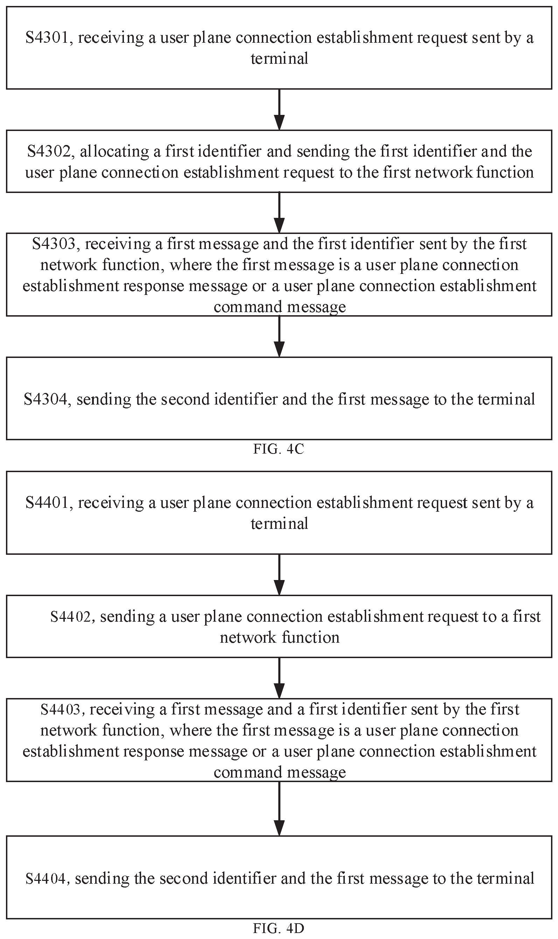

FIG. 4C is a schematic flowchart of a method for processing a user plane positioning connection according to an embodiment of the present disclosure. As shown in FIG. 4C, the embodiment of the present disclosure relates to a second network function. The above method includes:
S4301: Receiving a user plane connection establishment request sent by a terminal.

Optional implementations of step S4301 can be found in other related parts of the embodiments involved in FIGs. 2, 3A-3E, and 4A-4B, and will not be repeated here.

S4302: Allocating a first identifier and sending the first identifier and the user plane connection establishment request to the first network function.

Optional implementations of step S4302 can be found in other related parts of the embodiments involved in FIGs. 2, 3A-3E, and 4A-4B, and will not be repeated here.

S4303: Receiving a first message and the first identifier sent by the first network function, where the first message is a user plane connection establishment response message or a user plane connection establishment command message.

Optional implementations of step S4303 can be found in other related parts of the embodiments involved in FIGs. 2,3A-3E, and 4A-4B, and will not be repeated here.

S4304: Sending the second identifier and the first message to the terminal.

Optional implementations of step S4304 can be found in other related parts of the embodiments illustrated in FIGs. 2, 3A-3E, and 4A-4B, and will not be repeated here.

In some embodiments, steps S4301 and S4302 can be interchanged or performed simultaneously. Steps S4303 and S4304 can be interchanged or performed simultaneously.

In some embodiments, step S4301 is optional, and one or more of these steps can be omitted or substituted in different embodiments.

In some embodiments, step S4302 is optional, and one or more of these steps can be omitted or substituted in different embodiments.

In some embodiments, step S4303 is optional, and one or more of these steps can be omitted or substituted in different embodiments.

In some embodiments, step S4304 is optional, and one or more of these steps may be omitted or substituted in different embodiments.

FIG. 4D is a schematic flowchart of a method for processing a user plane positioning connection according to an embodiment of the present disclosure. As shown in FIG. 4D, the embodiment of the present disclosure relates to a second network function, and the above method includes:
S4401: Receiving a user plane connection establishment request sent by a terminal.

Optional implementations of step S4401 can be found in other related parts of the embodiments involved in FIGs. 2, 3A-3E, and 4A-4C, and will not be repeated here.

S4402: Sending a user plane connection establishment request to a first network function.

Optional implementations of step S4402 can be found in other related parts of the embodiments involved in FIGs. 2, 3A-3E, and 4A-4C, and will not be repeated here.

S4403: Receiving a first message and a first identifier sent by the first network function, where the first message is a user plane connection establishment response message or a user plane connection establishment command message.

Optional implementations of step S4403 can be found in other related parts of the embodiments illustrated in FIGs. 2, 3A-3E, and 4A-4C, and will not be repeated here.

S4404: Sending the second identifier and the first message to the terminal.

Optional implementations of step S4404 can be found in other related parts of the embodiments illustrated in FIGs. 2, 3A-3E, and 4A-4C, and will not be repeated here.

In some embodiments, steps S4401 and S4402 can be interchanged or performed simultaneously. Steps S4403 and S4404 can be interchanged or performed simultaneously.

In some embodiments, step S4401 is optional, and one or more of these steps can be omitted or substituted in different embodiments.

In some embodiments, step S4402 is optional, and one or more of these steps can be omitted or substituted in different embodiments.

In some embodiments, step S4403 is optional, and one or more of these steps can be omitted or substituted in different embodiments.

In some embodiments, step S4404 is optional, and one or more of these steps may be omitted or substituted in different embodiments.

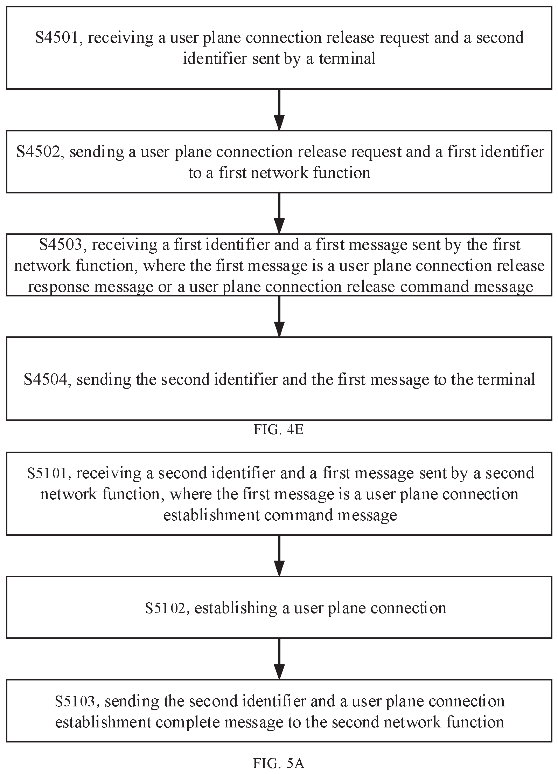

FIG. 4E is a schematic flowchart of a method for processing a user plane positioning connection according to an embodiment of the present disclosure. As shown in FIG. 4E, the embodiment of the present disclosure relates to a second network function, and the above method includes:
S4501: Receiving a user plane connection release request and a second identifier sent by a terminal.

Optional implementations of step S4501 can be found in other related parts of the embodiments involved in FIGs. 2, 3A-3E, and 4A-4D, and will not be repeated here.

S4502: Sending a user plane connection release request and a first identifier to a first network function.

Optional implementations of step S4502 can be found in other related parts of the embodiments involved in FIGs. 2, 3A-3E, and 4A-4D, and will not be repeated here.

S4503: Receiving a first identifier and a first message sent by the first network function, where the first message is a user plane connection release response message or a user plane connection release command message.

Optional implementations of step S4503 can be found in other related parts of the embodiments illustrated in FIGs. 2, 3A-3E, and 4A-4D, and will not be repeated here.

S4504: Sending the second identifier and the first message to the terminal.

Optional implementations of step S4504 can be found in other related parts of the embodiments illustrated in FIGs. 2, 3A-3E, and 4A-4D, and will not be repeated here.

In some embodiments, steps S4501 and S4502 can be interchanged or performed simultaneously. Steps S4503 and S4504 can be interchanged or performed simultaneously.

In some embodiments, step S4501 is optional, and one or more of these steps can be omitted or substituted in different embodiments.

In some embodiments, step S4502 is optional, and one or more of these steps can be omitted or substituted in different embodiments.

In some embodiments, step S4503 is optional, and one or more of these steps can be omitted or substituted in different embodiments.

In some embodiments, step S4504 is optional, and one or more of these steps may be omitted or substituted in different embodiments.

FIG. 5A is a schematic flowchart of a method for processing a user plane positioning connection according to an embodiment of the present disclosure. As shown in FIG. 5A, the embodiment of the present disclosure relates to a terminal, and the above method includes:
S5101: Receiving a second identifier and a first message sent by a second network function, where the first message is a user plane connection establishment command message.

Optional implementations of step S5101 can be found in other related parts of the embodiments involved in FIGs. 2, 3A-3E, and 4A-4E, and will not be repeated here.

S5102: Establishing a user plane connection.

Optional implementations of step S5102 can be found in other related parts of the embodiments involved in FIGs. 2, 3A-3E, and 4A-4E, and will not be repeated here.

S5103: Sending the second identifier and a user plane connection establishment complete message to the second network function.

Optional implementations of step S5103 can be found in other related parts of the embodiments described in FIGs. 2, 3 3A-3E, and 4A-4E, and will not be repeated here.

In some embodiments, steps S5101 and S5102 can be interchanged or executed simultaneously. Steps S5102 and S5103 can be interchanged or executed simultaneously.

In some embodiments, step S5101 is optional, and one or more of these steps can be omitted or substituted in different embodiments.

In some embodiments, step S5102 is optional, and one or more of these steps can be omitted or substituted in different embodiments.

In some embodiments, step S5103 is optional, and one or more of these steps can be omitted or substituted in different embodiments.

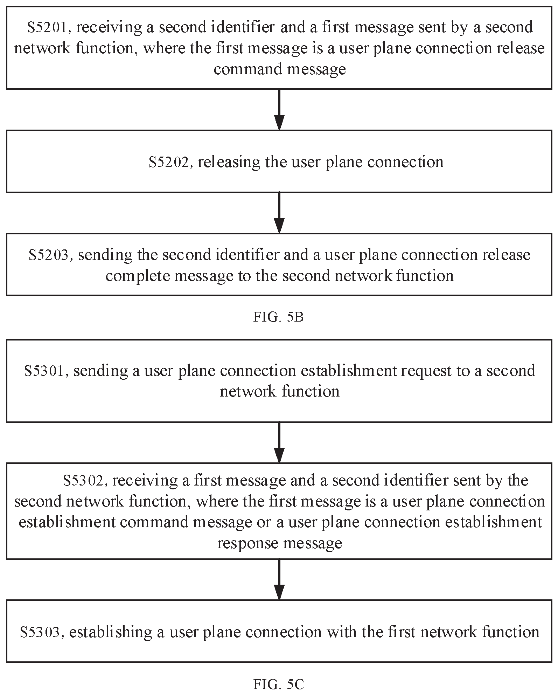

FIG. 5B is a schematic flowchart of a method for processing a user plane positioning connection according to an embodiment of the present disclosure. As shown in FIG. 5B, the embodiment of the present disclosure relates to a terminal, and the above method includes:
S5201: Receiving a second identifier and a first message sent by a second network function, where the first message is a user plane connection release command message.

Optional implementations of step S5201 can be found in other related parts of the embodiments illustrated in FIGs. 2, 3A-3E, 4A-4E, and 5A, and will not be repeated here.

S5202: Releasing the user plane connection.

Optional implementations of step S5202 can be found in other related parts of the embodiments illustrated in FIGs. 2, 3A-3E, 4A-4E, and 5A,, and will not be repeated here.

S5203: Sending the second identifier and a user plane connection release complete message to the second network function.

Optional implementations of step S5203 can be found in other related parts of the embodiments illustrated in FIGs. 2, 3A-3E, 4A-4E, and 5A,, and will not be repeated here.

In some embodiments, steps S5201 and S5202 can be interchanged or executed simultaneously. Steps S5202 and S5203 can be interchanged or executed simultaneously.

In some embodiments, step S5201 is optional, and one or more of these steps may be omitted or substituted in different embodiments.

In some embodiments, step S5202 is optional, and one or more of these steps may be omitted or substituted in different embodiments.

In some embodiments, step S5203 is optional, and one or more of these steps may be omitted or substituted in different embodiments.

FIG. 5C is a schematic flowchart of a method for processing a user plane positioning connection according to an embodiment of the present disclosure. As shown in FIG. 5C, the embodiment of the present disclosure relates to a terminal, and the above method includes:
S5301, sending a user plane connection establishment request to a second network function.

Optional implementations of step S5301 can be found in other related parts of the embodiments involved in FIGs. 2, 3A-3E, 4A-4E, 5A, and 5B, and will not be repeated here.

S5302, receiving a first message and a second identifier sent by the second network function, where the first message is a user plane connection establishment command message or a user plane connection establishment response message.

Optional implementations of step S5302 can be found in other related parts of the embodiments illustrated in FIGs. 2, 3A-3E, 4A-4E, 5A, and 5B, and will not be repeated here.

S5303, establishing a user plane connection with the first network function.

Optional implementations of step S5303 can be found in other related parts of the embodiments illustrated in FIGs. 2, 3A-3E, 4A-4E, 5A, and 5B, and will not be repeated here.

In some embodiments, steps S5301 and S5302 can be interchanged or performed simultaneously. Steps S5302 and S5303 can be interchanged or performed simultaneously.

In some embodiments, step S5301 is optional, and one or more of these steps can be omitted or substituted in different embodiments.

In some embodiments, step S5302 is optional, and one or more of these steps can be omitted or substituted in different embodiments.

In some embodiments, step S5303 is optional, and one or more of these steps may be omitted or substituted in different embodiments.

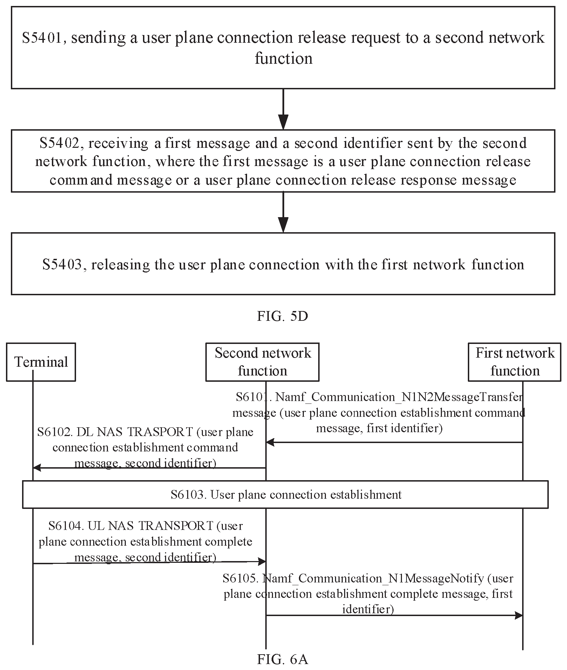

FIG. 5D is a schematic flowchart of a method for processing a user plane positioning connection according to an embodiment of the present disclosure. As shown in FIG. 5D, the embodiment of the present disclosure relates to a terminal, and the above method includes:
S5401: Sending a user plane connection release request to a second network function.

Optional implementations of step S5401 can be found in other related parts of the embodiments involved in FIGs. 2, 3A-3E, 4A-4E, and 5A-5C, and will not be repeated here.

S5402: Receiving a first message and a second identifier sent by the second network function, where the first message is a user plane connection release command message or a user plane connection release response message.

Optional implementations of step S5402 can be found in other related parts of the embodiments involved in FIGs. 2, 3A-3E, 4A-4E, and 5A-5C and will not be repeated here.

S5403: Releasing the user plane connection with the first network function.

Optional implementations of step S5403 can be found in other related parts of the embodiments illustrated in FIGs. 2, 3A-3E, 4A-4E, and 5A-5C, and will not be repeated here.

In some embodiments, steps S5401 and S5402 can be interchanged or performed simultaneously. Steps S5402 and S5403 can be interchanged or performed simultaneously.

In some embodiments, step S5401 is optional, and one or more of these steps can be omitted or substituted in different embodiments.

In some embodiments, step S5402 is optional, and one or more of these steps can be omitted or substituted in different embodiments.

In some embodiments, step S5403 is optional, and one or more of these steps can be omitted or substituted in different embodiments.

FIG. 6A is an interactive schematic diagram of a method for processing a user plane positioning connection according to an embodiment of the present disclosure. As shown in the figure, the method includes:
S6101: The first network function determines to establish a user plane connection for user plane positioning, but no user plane connection has been established. The first network function allocates a first identifier and invokes Namf_Communication_N1N2MessageTransfer to the second network function to transfer a user plane connection establishment command message and the first identifier;
S6102: The second network function determines a second identifier based on the first identifier, sets the payload container type of the DL NAS TRASPORT message to "UPP-CMI container", includes the user plane connection establishment command message in the payload container, includes the second identifier in the additional information of the DL NAS TRASPORT message, and sends the DL NAS TRASPORT message to the terminal;
S6103: The terminal establishes a user plane connection;
S6104: The terminal sets the payload container type of the UL NAS TRASPORT message to "UPP-CMI container", includes a user plane connection establishment complete message in the payload container, includes the second identifier in the additional information of the UL NAS TRASPORT message, and sends the UL NAS TRASPORT message to the second network function.
S6105, the second network function determines the first identifier based on the second identifier, and invokes the Namf_Communication_N1MessageNotify message to the first network function indicated by the first identifier. This message includes a user plane connection establishment complete message and the first identifier.

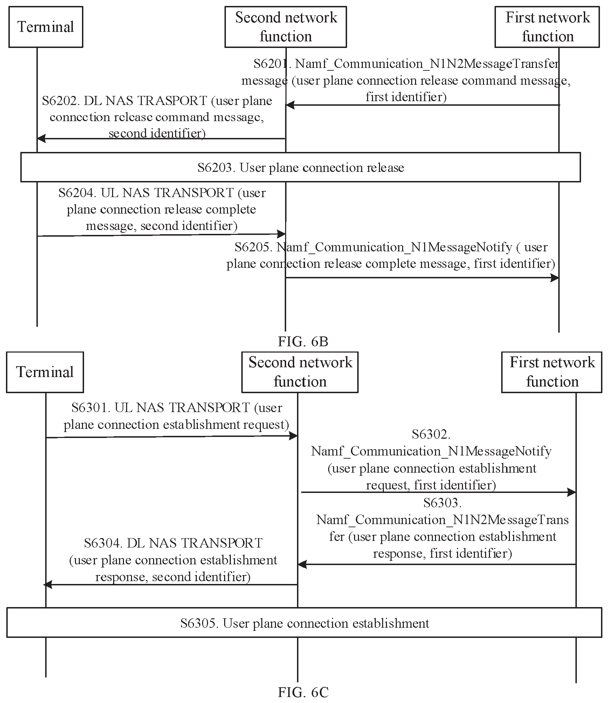

FIG. 6B is an interactive schematic diagram of a method for processing a user plane positioning connection according to an embodiment of the present disclosure. As shown in the figure, the method includes:
S6201: A first network function determines to release the user plane connection and invokes Namf_Communication_N1N2MessageTransfer to a second network function to transfer a user plane connection release command message and a first identifier;
S6202: The second network function determines a second identifier based on the first identifier, sets the payload container type of the DL NAS TRASPORT message to "UPP-CMI container", includes the user plane connection release command message in the payload container, includes the second identifier in the additional information of the DL NAS TRASPORT message, and sends the DL NAS TRASPORT message to the terminal;
S6203: The terminal releases the user plane connection;
S6204: The terminal sets the payload container type of the UL NAS TRASPORT message to "UPP-CMI container", includes a user plane connection release complete message in the payload container, includes the second identifier in the additional information of the UL NAS TRASPORT message, and sends the UL NAS TRASPORT message to the second network function.
S6205, the second network function determines the first identifier based on the second identifier, and invokes the Namf_Communication_N1MessageNotify message to the first network function indicated by the first identifier. This message includes a user plane connection release complete message and the first identifier.

FIG. 6C is an interactive schematic diagram of a method for processing a user plane positioning connection according to an embodiment of the present disclosure. As shown in the figure, the method includes:
S6301, the terminal sets the payload container type of the UL NAS TRASPORT message to "UPP-CMI container", includes the user plane connection establishment request in the payload container of the UL NAS TRASPORT message, and sends the UL NAS TRASPORT message to the second network function;
S6302, the second network function selects a first network function capable of performing user plane positioning and allocates the first identifier. The second network function invokes the Namf_Communication_N1MessageNotify message to the selected first network function. This message includes a user plane connection establishment request message and a first identifier.
S6303: The first network function accepts the user plane connection establishment request, determines to establish a user plane connection for user plane positioning, and invokes the Namf_Communication_N1N2MessageTransfer message to the second network function to send the first identifier and a first message. The first message is either a user plane connection establishment response message or a user plane connection establishment command message.
S6304: The second network function determines the second identifier based on the first identifier, sets the payload container type of the DL NAS TRASPORT message to "UPP-CMI container", includes the user plane connection establishment response message or user plane connection establishment command in the payload container, includes the second identifier in the additional information of the DL NAS TRASPORT message, and sends the DL NAS TRASPORT message to the terminal.
S6305: The terminal establishes a user plane connection with the first network function.

It should be noted that in some embodiments, step S6302 may also be: the second network function selecting a first network function capable of user plane positioning, and invoking a Namf_Communication_N1MessageNotify message to the selected first network function. This message includes a user plane connection establishment request message. Further, step S6302 is: the first network function accepting the user plane connection establishment request, determining to establish user plane connection for user plane positioning, allocating a first identifier, and invoking a Namf_Communication_N1N2MessageTransfer message to transfer the first identifier and a first message. The first message is either a user plane connection establishment response message or a user plane connection establishment command message.

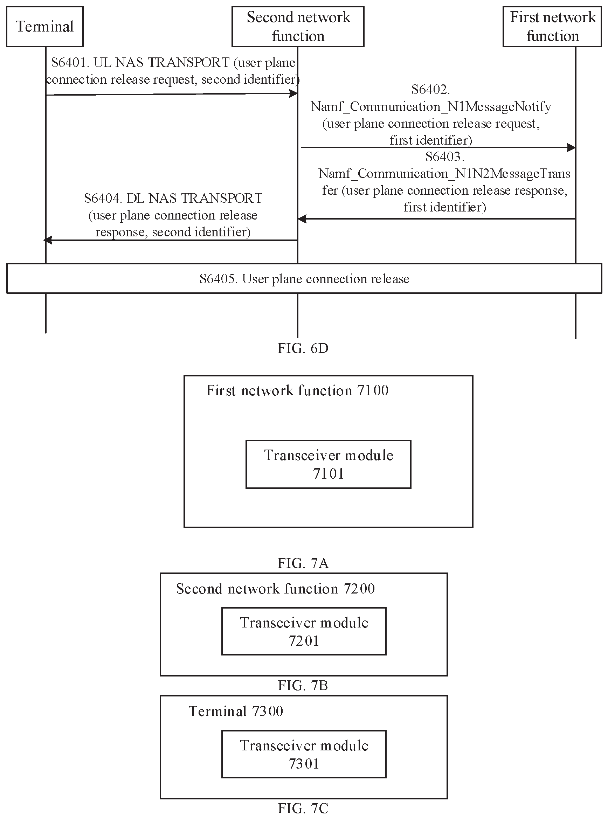

FIG. 6D is an interactive schematic diagram of a method for processing a user plane positioning connection according to an embodiment of the present disclosure. As shown in the figure, the method includes:
S6401: The terminal requests to release the user plane connection. The terminal sets the payload container type of the UL NAS TRASPORT message to "UPP-CMI container", includes the user plane connection release request in the payload container, includes the second identifier in the additional information of the UL NAS TRASPORT message, and sends the UL NAS TRASPORT message to the second network function.
S6402: The second network function determines the first identifier based on the second identifier, and the second network function invokes the Namf_Communication_N1MessageNotify message to the first network function indicated by the first identifier. This message includes a user plane connection release request message and the first identifier;
S6403: The first network function receives the release of the user plane connection and invokes Namf_Communication_N1N2MessageTransfer to the second network function to transfer a user plane connection release response message or a user plane connection release command message and the first identifier;
S6404: The second network function determines the second identifier based on the first identifier, sets the payload container type of the DL NAS TRASPORT message to "UPP-CMI container", includes the user plane connection release response message or user plane connection release command message in the payload container, and includes the second identifier in the additional information of the DL NAS TRASPORT message;
S6405: The terminal releases the user plane connection with the first network function.

The embodiments of the present disclosure also provide a device for implementing any of the above methods. For example, a device is provided that includes units or modules for implementing the steps performed by the terminal in any of the above methods. Another device is provided that includes units or modules for implementing the steps performed by network devices (e.g., access network devices, core network functional nodes, core network devices, etc.) in any of the above methods.

It should be understood that the division of units or modules in the above device is only a logical functional division. In actual implementation, they can be fully or partially integrated into a single physical entity, or they can be physically separated. Furthermore, the units or modules in the device can be implemented in the form of processor calling software: for example, the device includes a processor connected to a memory, the memory storing instructions, and the processor calling the instructions stored in the memory to implement any of the above methods or to implement the functions of the units or modules of the above device. The processor is, for example, a general-purpose processor, such as a Central Processing Unit (CPU) or a microprocessor, and the memory is either internal to the device or external to the device. Alternatively, the units or modules in the device can be implemented in the form of hardware circuits. The functionality of some or all of the units or modules can be achieved through the design of these hardware circuits, which can be understood as one or more processors. For example, in one implementation, the hardware circuit is an application-specific integrated circuit (ASIC), and the functionality of some or all of the units or modules is achieved through the design of the logical relationships between the components within the circuit. In another implementation, the hardware circuit can be implemented using a programmable logic device (PLD), such as a field-programmable gate array (FPGA), which can include a large number of logic gates. The connection relationships between the logic gates are configured through configuration files, thereby achieving the functionality of some or all of the units or modules. All units or modules of the above device can be implemented entirely through processor-called software, entirely through hardware circuits, or partially through processor-called software with the remaining parts implemented through hardware circuits.

In the embodiment of the present disclosure, the processor is a circuit with signal processing capabilities. In one implementation, the processor can be a circuit with instruction read and execute capabilities, such as a Central Processing Unit (CPU), a microprocessor, a graphics processing unit (GPU) (which can be understood as a microprocessor), or a digital signal processor (DSP). In another implementation, the processor can implement certain functions through the logical relationships of hardware circuits. The logical relationships of the aforementioned hardware circuits are fixed or reconfigurable. For example, the processor is a hardware circuit implemented using an application-specific integrated circuit (ASIC) or a programmable logic device (PLD), such as an FPGA. In a reconfigurable hardware circuit, the process of the processor loading a configuration document and configuring the hardware circuit can be understood as the process of the processor loading instructions to implement the functions of some or all of the above units or modules. Furthermore, it can also be a hardware circuit designed for artificial intelligence, which can be understood as an ASIC, such as a Neural Network Processing Unit (NPU), a Tensor Processing Unit (TPU), or a Deep Learning Processing Unit (DPU).

FIG. 7A is a schematic diagram of a structure of the first network function proposed in an embodiment of the present disclosure. As shown in FIG. 7A, the first network function 7100 may include a transceiver module 7101. In some embodiments, the transceiver module is configured to send a first identifier and a first message to the second network function. Optionally, the transceiver module is configured to perform the communication steps such as sending and/or receiving performed by the first network function 1021 in any of the above methods, such as steps S2101 and S2102, which will not be described in detail here.

FIG. 7B is a schematic diagram of a structure of the second network function proposed in an embodiment of the present disclosure. As shown in FIG. 7B, the second network function 7200 may include a transceiver module 7201. In some embodiments, the transceiver module is configured to receive the first identifier and the first message sent by the first network function. Optionally, the transceiver module is configured to perform the communication steps such as sending and/or receiving performed by the second network function 1022 in any of the above methods, such as steps S2101 and S2102, which will not be described in detail here.

FIG. 7C is a schematic diagram of a structure of the terminal proposed in an embodiment of the present disclosure. As shown in FIG. 7C, the terminal 7300 may include a transceiver module 7301. In some embodiments, the transceiver module receives a second identifier and a first message sent by a second network function. Optionally, the transceiver module is configured to perform communication steps such as sending and/or receiving performed by the terminal in any of the above methods, such as steps S2101 and S2102, which will not be described in detail here.

In some embodiments, the processing module may be a single module or may include multiple sub-modules. Optionally, the multiple sub-modules respectively perform all or part of the steps required by the processing module. Optionally, the processing module may be interchangeable with a processor.

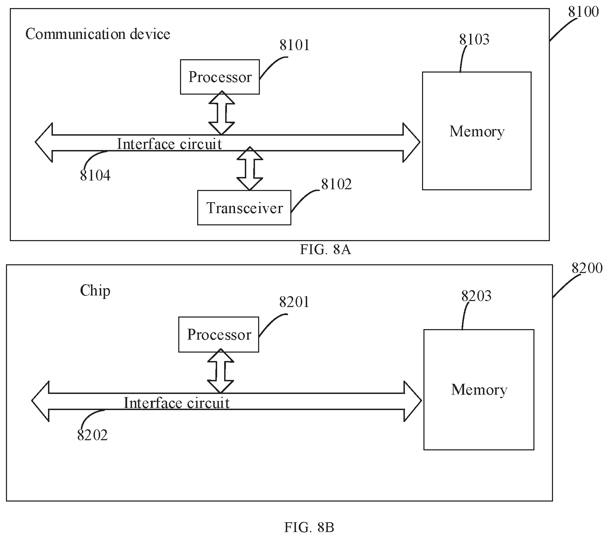

FIG. 8A is a schematic diagram of a structure of the communication device 8100 proposed in an embodiment of the present disclosure. The communication device 8100 can be a network device (e.g., access network device, core network device, etc.), a first network function, a second network function, a terminal, or a chip, chip system, processor, etc. that supports the implementation of any of the above methods in the first network function, or a chip, chip system, processor, etc. that supports the implementation of any of the above methods in the second network function, or a chip, chip system, processor, etc. that supports the implementation of any of the above methods in the terminal. The communication device 8100 can be configured to implement the methods described in the above method embodiments; please refer to the description in the above method embodiments for details.

As shown in FIG. 8A, the communication device 8100 includes one or more processors 8101. The processor 8101 can be a general-purpose processor or a dedicated processor, such as a baseband processor or a central processing unit (CPU). The baseband processor can be configured to process communication protocols and communication data, while the CPU can be configured to control communication devices (e.g., base stations, baseband chips, terminal devices, terminal device chips, DUs or CUs, etc.), execute programs, and process program data. Optionally, the communication device 8100 is configured to perform any of the above methods. Optionally, one or more processors 8101 are configured to call instructions to cause the communication device 8100 to perform any of the above methods.

In some embodiments, the communication device 8100 further includes one or more transceivers 8102. When the communication device 8100 includes one or more transceivers 8102, the transceivers 8102 perform at least one of the communication steps (e.g., steps S2101, S2102, but not limited thereto) in the above methods, such as sending and/or receiving. In optional embodiments, the transceiver may include a receiver and/or a transmitter, which may be separate or integrated. Optionally, the terms transceiver, transceiver unit, transceiver machine, transceiver circuit, interface circuit, interface, etc., can be used interchangeably; the terms transmitter, transmitting unit, transmitter machine, transmitting circuit, etc., can be used interchangeably; and the terms receiver, receiving unit, receiver machine, receiving circuit, etc., can be used interchangeably.

In some embodiments, the communication device 8100 further includes one or more memories 8103 for storing data. Optionally, all or part of the memory 8103 may be located outside the communication device 8100. In an optional embodiment, the communication device 8100 may include one or more interface circuits 8104. Optionally, the interface circuit 8104 is connected to the memory 8102, and the interface circuit 8104 can be configured to receive data from the memory 8102 or other devices, and can be configured to send data to the memory 8102 or other devices. For example, the interface circuit 8104 can read data stored in the memory 8102 and send the data to the processor 8101.

The communication device 8100 described in the above embodiments may be a network device or a terminal, but the scope of the communication device 8100 described in the present disclosure is not limited thereto, and the structure of the communication device 8100 may not be limited to FIG. 8A. The communication device may be a standalone device or may be part of a larger device. For example, a communication device can be: (1) a standalone integrated circuit (IC), or chip, or chip system or subsystem; (2) a collection of one or more ICs, optionally including storage components for storing data and programs; (3) an ASIC, such as a modem; (4) a module that can be embedded in other devices; (5) a receiver, terminal device, smart terminal device, cellular phone, wireless device, handheld device, mobile unit, vehicle-mounted device, network device, cloud device, artificial intelligence device, etc.; (6) others, etc.

FIG. 8B is a schematic diagram of a structure of a chip 8200 proposed in an embodiment of the present disclosure. For cases where the communication device 8100 can be a chip or chip system, refer to the schematic diagram of the structure of chip 8200 shown in FIG. 8B, but it is not limited thereto.

The chip 8200 includes one or more processors 8201. Chip 8200 is configured to perform any of the above methods.

In some embodiments, the chip 8200 further includes one or more interface circuits 8202. Optionally, the terms interface circuit, interface, transceiver pin, etc., can be used interchangeably. In some embodiments, the chip 8200 further includes one or more memories 8203 for storing data. Optionally, all or part of the memories 8203 may be located outside of chip 8200. Optionally, the interface circuitry 8202 is connected to the memory 8203, and the interface circuitry 8202 can be configured to receive data from memory 8203 or other devices, and the interface circuitry 8202 can be configured to send data to the memory 8203 or other devices. For example, the interface circuitry 8202 can read data stored in the memory 8203 and send that data to the processor 8201.

In some embodiments, the interface circuitry 8202 performs at least one of the communication steps of sending and/or receiving, etc. (e.g., steps S2101, S2102, but not limited thereto) in the above-described method. For example, the interface circuitry 8202 performing communication steps of sending and/or receiving, etc. in the above-described method means that the interface circuitry 8202 performs data interaction between the processor 8201, the chip 8200, the memory 8203, or the transceiver device.

The present disclosure also provides a storage medium storing instructions that, when executed on a communication device 8100, cause the communication device 8100 to perform any of the above methods. Optionally, the storage medium is an electronic storage medium. Optionally, the storage medium is a computer-readable storage medium, but not limited thereto; it may also be a storage medium readable by other devices. Optionally, the storage medium may be a non-transitory storage medium, but not limited thereto; it may also be a transitory storage medium.

The present disclosure also provides a program product that, when executed by the communication device 8100, causes the communication device 8100 to perform any of the above methods. Optionally, the program product is a computer program product.

The present disclosure also provides a computer program that, when executed on a computer, causes the computer to perform any of the above methods.

## Claims

1. A method for processing a user plane positioning connection, performed by a first network function, comprising:
sending a first identifier and a first message to a second network function;
wherein the first message is related to establishing a user plane connection or related to releasing a user plane connection; and
the first identifier is configured to identify first information, and the first information is at least one of the first network function, the user plane connection, or a location service session between the first network function and a terminal.

2. The method according to claim 1, wherein
the first identifier is allocated by the first network function based on determining to establish the user plane connection for user plane positioning, or
the first identifier is allocated by the second network function upon receipt of a user plane connection establishment request sent by the terminal.

3. The method according to claim 1 or 2, wherein the first message related to establishing the user plane connection is at least one of:
a user plane connection establishment command message; or
a user plane connection establishment response message.

4. The method according to claim 3, wherein sending the first identifier and the first message to the second network function comprises:
determining to establish the user plane connection for user plane positioning, and allocating the first identifier;
and
sending the first identifier and the first message to the second network function, wherein the first message is the user plane connection establishment command message.

5. The method according to claim 3, wherein sending the first identifier and the first message to the second network function comprises:
receiving a user plane connection establishment request and the first identifier sent by the second network function, wherein the first identifier is allocated by the second network function upon receipt of the user plane connection establishment request sent by the terminal; and
accepting the user plane connection establishment request, determining to establish the user plane connection for user plane positioning, and sending the first identifier and the first message to the second network function, wherein the first message is the user plane connection establishment response message or the user plane connection establishment command message.

6. The method according to claim 3, wherein sending the first identifier and the first message to the second network function comprises:
receiving a user plane connection establishment request sent by the second network function, wherein the user plane connection establishment request is sent by the terminal to the second network function;
accepting the user plane connection establishment request, determining to establish the user plane connection for user plane positioning, and allocating the first identifier; and
sending the first identifier and the first message to the second network function, wherein the first message is the user plane connection establishment response message or the user plane connection establishment command message.

7. The method according to claim 4, wherein after sending the first identifier and the first message to the second network function, the method further comprises:
receiving the first identifier and a user plane connection establishment complete message sent by the second network function.

8. The method according to claim 1 or 2, wherein the first message related to releasing the user plane connection is at least one of:
a user plane connection release command message; or
a user plane connection release response message.

9. The method according to claim 8, wherein sending the first identifier and the first message to the second network function comprises:
determining to release the user plane connection, and sending the first identifier and the first message to the second network function, wherein the first message is the user plane connection release command message.

10. The method according to claim 8, wherein sending the first identifier and the first message to the second network function comprises:
receiving a user plane connection release request and the first identifier sent by the second network function; and
accepting the user plane connection release request, determining to release the user plane connection, and sending the first identifier and the first message to the second network function, wherein the first message is the user plane connection release response message or the user plane connection release command message.

11. The method according to claim 9, wherein after sending the first identifier and the first message to the second network function, the method further comprises:
receiving the first identifier and a user plane connection release complete message sent by the second network function.

12. A method for processing a user plane positioning connection, performed by a second network function, comprising:
receiving a first identifier and a first message sent by a first network function;
wherein the first message is related to establishing a user plane connection or related to releasing a user plane connection; and
the first identifier is configured to identify first information, and the first information is at least one of the first network function, the user plane connection, or a location service session between the first network function and a terminal.

13. The method according to claim 12, wherein
the first identifier is allocated by the first network function based on determining to establish the user plane connection for user plane positioning; or
the first identifier is allocated by the second network function upon receipt of a user plane connection establishment request sent by the terminal.

14. The method according to claim 12 or 13, wherein the first message related to establishing the user plane connection is at least one of:
a user plane connection establishment command message; or
a user plane connection establishment response message.

15. The method according to claim 14, wherein the first message is the user plane connection establishment command message; and
the first identifier and the first message are sent by the first network function determining to establish the user plane connection for user plane positioning.

16. The method according to claim 15, wherein the first identifier is configured to identify the first information in a core network; and
after receiving the first identifier and the first message sent by the first network function, the method further comprises:
mapping the first identifier to a second identifier, and sending the second identifier and the first message to the terminal, wherein the second identifier is configured to identify the first information in the terminal;
receiving the second identifier and a user plane connection establishment complete message sent by the terminal; and
mapping the second identifier to the first identifier, and sending the first identifier and the user plane connection establishment complete message to the first network function indicated by the first identifier.

17. The method according to claim 15, wherein the first identifier is configured to identify the first information in a core network and the terminal;
after receiving the first identifier and the first message sent by the first network function, the method further comprises:
using the first identifier as a second identifier, and sending the second identifier and the first message to the terminal;
receiving the second identifier and a user plane connection establishment complete message sent by the terminal; and
using the second identifier as the first identifier, and sending the first identifier and the user plane connection establishment complete message to the first network function indicated by the first identifier.

18. The method according to claim 14, wherein receiving the first identifier and the first message sent by the first network function comprises:
receiving a user plane connection establishment request sent by the terminal;
sending the user plane connection establishment request to the first network function; and
receiving the first identifier and the first message sent by the first network function, wherein the first message is the user plane connection establishment response message or the user plane connection establishment command message, and the first identifier is allocated by the first network function based on determining to establish user plane connection for user plane positioning.

19. The method according to claim 14, wherein receiving the first identifier and the first message sent by the first network function comprises:
receiving a user plane connection establishment request sent by the terminal;
allocating the first identifier;
sending the user plane connection establishment request and the first identifier to the first network function;
and
receiving the first identifier and the first message sent by the first network function, wherein the first message is the user plane connection establishment response message or the user plane connection establishment command message.

20. The method according to claim 18 or 19, wherein the first identifier is configured to identify the first information in a core network;
after receiving the first identifier and the first message sent by the first network function, the method further comprises:
mapping the first identifier to a second identifier, and sending the second identifier and the first message to the terminal, wherein the second identifier is configured to identify the first information in the terminal.

21. The method according to claim 18 or 19, wherein the first identifier is configured to identify the first information in a core network and the terminal; and
after receiving the first identifier and the first message sent by the first network function, the method further comprises:
using the first identifier as a second identifier, and sending the second identifier and the first message to the terminal.

22. The method according to claim 12 or 13, wherein the message related to releasing the user plane connection comprises at least one of:
a user plane connection release command message; or
a user plane connection release response message.

23. The method according to claim 22, wherein the first message is a user plane connection release command message; and
the first identifier and the first message are sent by the first network function after the first network function determines to release the user plane connection.

24. The method according to claim 23, wherein the first identifier is configured to identify the first information in a core network; and
after receiving the first identifier and the first message sent by the first network function, the method further comprises:
mapping the first identifier to a second identifier, and sending the second identifier and the first message to the terminal, wherein the second identifier is configured to identify the first information in the terminal;
receiving the second identifier and a user plane connection release complete message sent by the terminal;
and
mapping the second identifier to the first identifier, and sending the first identifier and the user plane connection release complete message to the first network function indicated by the first identifier.

25. The method according to claim 23, wherein the first identifier is configured to identify the first information in a core network and the terminal;
after receiving the first identifier and the first message sent by the first network function, the method further comprises:
using the first identifier as a second identifier, and sending the second identifier and the first message to the terminal;
receiving the second identifier and a user plane connection release complete message sent by the terminal;
and
using the second identifier as the first identifier, and sending the first identifier and the user plane connection release complete message to the first network function indicated by the first identifier.

26. The method according to claim 22, wherein receiving the first identifier and the first message sent by the first network function comprises:
receiving a user plane connection release request and a second identifier sent by the terminal, wherein the second identifier is configured to identify the first information in the terminal;
mapping the second identifier to the first identifier, the first identifier being configured to identify the first information in a core network, and sending the user plane connection release request and the first identifier to the first network function indicated by the first identifier; and
receiving the first identifier and the first message sent by the first network function, the first message being the user plane connection release response message or the user plane connection release command message.

27. The method according to claim 22, wherein receiving the first identifier and the first message sent by the first network function comprises:
receiving a user plane connection release request and a second identifier sent by a terminal, the second identifier being configured to identify the first information in a core network and the terminal;
using the second identifier as the first identifier, sending the user plane connection release request and the first identifier to the first network function indicated by the first identifier; and
receiving the first identifier and the first message sent by the first network function, the first message being the user plane connection release response message or the user plane connection release command message.

28. The method according to claim 26, wherein after receiving the first identifier and the first message sent by the first network function, the method further comprises:
mapping the first identifier to the second identifier; and
sending the second identifier and the first message to the terminal.

29. The method according to claim 27, wherein after receiving the first identifier and the first message sent by the first network function, the method further comprises:
using the first identifier as the second identifier; and
sending the second identifier and the first message to the terminal.

30. A method for processing a user plane positioning connection, performed by a terminal, comprising:
receiving a second identifier and a first message sent by a second network function;
wherein the first message is related to establishing a user plane connection or related to releasing a user plane connection;
the second identifier is determined based on a first identifier sent by a first network function, the first identifier is configured to identify first information, and the second identifier is configured to identify the first information in the terminal; and
the first information is at least one of the first network function, the user plane connection, or a location service session between the first network function and the terminal.

31. The method according to claim 30, wherein
the first identifier is allocated by the first network function based on determining to establish the user plane connection for user plane positioning, or
the first identifier is allocated by the second network function upon receipt of a user plane connection establishment request sent by the terminal.

32. The method according to claim 30 or 31, wherein the first message is a user plane connection establishment command message, and the method further comprises:
establishing the user plane connection for user plane positioning; and
sending the second identifier and a user plane connection establishment complete message to the second network function.

33. The method according to claim 30 or 31, wherein the first message is a user plane connection release command message, and the method further comprises:
releasing the user plane connection for user plane positioning; and
sending the second identifier and a user plane connection release complete message to the second network function.

34. The method according to claim 30 or 31, wherein the first message is a user plane connection establishment command or a user plane connection establishment response; and
before receiving the second identifier and the first message sent by the second network function, the method further comprises:
sending a user plane connection establishment request to the second network function.

35. The method according to claim 30 or 31, wherein the first message is a user plane connection release command or a user plane connection release response; and
before receiving the second identifier and the first message sent by the second network function, the method further comprises:
sending a user plane connection release request to the second network function.

36. A first network function, comprising:
a transceiver module, configured to send a first identifier and a first message to a second network function;
wherein the first message is related to establishing a user plane connection or related to releasing a user plane connection;
the first identifier is configured to identify first information, and the first information is at least one of the first network function, the user plane connection, or a location service session between the first network function and a terminal.

37. A second network function, comprising:
a transceiver module, configured to receive a first identifier and a first message sent by a first network function;
wherein the first message is related to establishing a user plane connection or related to releasing a user plane connection;
the first identifier is configured to identify first information, and the first information is at least one of the first network function, the user plane connection, or a location service session between the first network function and a terminal.

38. A terminal, comprising:
a transceiver module, configured to receive a second identifier and a first message sent by a second network function;
wherein the first message is related to establishing a user plane connection orrelated to releasing a user plane connection;
the second identifier is determined based on a first identifier sent by a first network function, the first identifier is configured to identify first information, and the second identifier is configured to identify the first information in the terminal;
the first information is at least one of the first network function, the user plane connection, or a location service session between the first network function and the terminal.

39. A communication system, comprising a first network function, a second network function, and a terminal, wherein the first network function is configured to implement the method for processing the user plane positioning connection according to any one of claims 1-11, the second network function is configured to implement the method for processing the user plane positioning connection according to any one of claims 12-29, and the terminal is configured to implement the method for processing the user plane positioning connection according to any one of claims 30-35.

40. A storage medium storing instructions, wherein when the instructions are executed on a communication device, the communication device is caused to perform the method for processing the user plane positioning connection according to any one of claims 1-11, 12-29, and 30-35.
